# EUROPÄISCHE PATENTANMELDUNG

(11) **EP 2 345 770 A1**
(43) Veröffentlichungstag der Anmeldung: **20.07.2011**
(21) Anmeldenummer: 10197143.0
(22) Anmeldetag: 28.12.2010
(51) Int. Cl.: E04B 1/80, F16L 59/065, E04B 1/90

(54) **Vakuumisolierung**

(30) Priorität: 29.12.2009 DE 102009060713
(71) Anmelder: Ingenieurbüro Kontech GmbH, 84508 Burgkirchen-Gendorf (DE); Wimmer, Johann, 84543 Winhöring (DE)
(72) Erfinder: Wimmer, Johann, 84543 Winhöring (DE); Backes, Bruno, 84518 Gaching (DE)
(74) Vertreter: Vossius & Partner

(57) **Zusammenfassung**

Die vorliegende Erfindung stellt ein verbessertes System einer Vakuumisolierung dar, welches die thermischen Vorteile von Vakuumisolationen verbindet mit einem einfachen und kostengünstigen Aufbau und geeignet ist plane sowie freigeformte Flächen auszubilden. Der Einsatzbereich erstreckt sich durch die Variation der Parameter über wesentliche Gebiete in denen thermische Isolierungen zum Einsatz kommen. Dies ist beispielsweise der Bereich Gebäude- und Objektdämmung, Kühl- Gefrier- Heizgeräte, Tieftemperatur und Transport. Die Vakuumisolierung 1 besteht aus zwei gasdichten Deckflächen 3, einer Matrix aus Zugelementen z.B. hochfeste Fasern 2 und der als Montagehilfe dienenden IR-reflektierenden Folien 4. Die Kombination des Folien-Faser-Verbundes wird bei der Montage zwischen die speziell gestalteten dünnwandigen Deckflächen gefügt und evakuiert. Dabei übernehmen die dann auf Zug belasteten Fasern die Stützfunktion zum Abtragen der auftretenden barometrischen Lasten und können Schubkräfte zwischen den Deckschichten aufnehmen.

## Beschreibung

Die vorliegende Erfindung betrifft eine Flächenkonstruktion bzw. ein Bauelement zur Wärme- und/oder Schallisolation mittels Vakuum sowie ein Verfahren zur Herstellung einer solchen Flächenkonstruktion.

Vakuumisolierungen sind als solche bereits bekannt. Plane Vakuumisolierungen sind jedoch mit dem Problem behaftet, dass auf den Deckflächen angreifende atmosphärische Lasten durch eine geeignete Konstruktion abgetragen werden müssen. Auch sind mit Füllkörpern versehene Vakuum-Isolier-Paneele bekannt.

Die DE 10119037 A1 betrifft ein evakuiertes Isolierelement mit zwei- oder dreidimensional gekrümmten Außenwänden, die mittels Abstandhaltern voneinander beabstandet gehalten sind, wobei die als Druckelemente ausgebildeten Abstandshalter ein einer Mehrzahl von über die Innenflächen der Außenwände verteilten Stützflächen angeordnet sind und die als Zugelemente ausgebildeten fadenförmigen oder folienartigen Abstandhalter über die Vorderendabschnitte der Druckelemente gespannt sind, wobei die Druckelemente wechselseitig in die Zwischenräume der gegenüberliegenden Druckelemente hineinragen und die Länge der Zugelement so bemessen ist, dass die Druckelemente weit ineinandergreifen, ohne die Gegenwandung oder entgegenstehende Druckelemente zu berühren, wobei die als Druckelemente ausgebildeten Abstandhalter auf den zwei- oder dreidimensional gekrümmten Außenwänden so angeordnet und ausgerichtet sind, dass die jeweils gegenüberliegenden Seitenflanken der Druckelemente näherungsweise parallel verlaufen.

Die WO 2004/076765 betrifft ein schall- und wärmeisolierendes Bauelement aus einem undurchlässigen Material, das einen hermetisch vakuumierten Hohlraum umschließt. Im Inneren des Hohlraums sind Fäden gestrafft installiert, die eine externe atmosphärische Drucklast von einem Gehäuseteil auf ein anderes übertragen. Zwischen den flachen Oberflächen der Gehäuseteile sind doppelseitig gewellte Platten angeordnet, um die die aus Glas oder Quarz hergestellten elastischen Fäden aufgewickelt sind.

Der Stand der Technik weist beispielsweise den Nachteil auf, dass der Strahlungsanteil am Gesamtwärmedurchlass sehr hoch ist. Dieser Anteil kann auch mit einer einfachen Verspiegelung nicht auf ein Niveau gesenkt werden, welches die zuvor beschriebenen Vakuumisolationen gegenüber mit Füllstoffen gefüllten Vakuum-Isolierpaneele attraktiv macht. Auch kommt es bei herkömmlichen Vakuum-Flächenisolierungen oft zu Wärmeaustausch durch zirkulierende Gase, die noch im evakuierten Raum vorhanden sind. Ferner weisen bekannte Isolierungen oft den Nachteil auf, dass die Herstellung, insbesondere der Zusammenbau, aufwendig ist, und dass die planen Vakuumisolierungen richtungsabhängige mechanische und/oder thermische Eigenschaften aufweisen, durch die ihr Einsatzgebiet eingeschränkt ist.

Es ist daher eine bevorzugte Aufgabe der vorliegenden Erfindung, eine verbesserte oder alternative Vakuumisolierung bereitzustellen. Es ist ferner eine weitere bevorzugte Aufgabe der Erfindung, den Wärme- und oder Schalldurchlass zu verringem bzw. die diesbezügliche Isolation zu verbessern. Zudem liegt der Erfindung bevorzugt die Aufgabe zugrunde, eine leichte Flächenkonstruktion bzw. ein leichtes Bauelement bereitzustellen, die überdies besonders bevorzugt auch einfach und/oder kostengünstig und bevorzugt mit geringem Materialaufwand herstellbar bzw. montierbar ist. Ferner besteht ein Bedarf für eine Flächenkonstruktion, die vielseitig einsetzbar ist, besonders bevorzugt richtungsunabhängige mechanische und/oder thermische Eigenschaften aufweist, und ferner bevorzugt in verschiedenen Geometrien und Größen ausbildbar ist.

Diese Aufgabe(n) wird/werden gelöst durch den Gegenstand der vorliegenden Ansprüche, sowie die nachfolgend diskutierten bevorzugten Aspekte der vorliegenden Erfindung.

Die vorliegende Erfindung betrifft eine Flächenkonstruktion bzw. ein Bauteil oder Isolations-Paneel zur Wärme- und/oder Schallisolation mittels Vakuum. Die Flächenkonstruktion umfasst vorzugsweise zwei zumindest teilweise strukturierte, vorzugsweise gewölbte, Wandelemente und mindestens ein Verbindungselement. Die Wandelemente sind im Wesentlichen parallel zueinander derart angeordnet, dass die Wölbungen der Wandelemente zueinander versetzt sind. Dabei verbindet das mindestens eine Verbindungselement die Wandelemente unter Aufnahme von Zugkräften und stützt die Wandelemente gegeneinander ab. Erfindungsgemäß ist dabei ferner mindestens ein Strahlungsschild vorgesehen, das sich zwischen den Wandelementen erstreckt.

Die zumindest teilweise strukturierten Wandelemente umfassen dabei zumindest bereichsweise vertiefte bzw. gewölbte Abschnitte bzw. zumindest in einem Teilbereich eine Vertiefung bzw. Wölbung. Vorteilhaft sind die Wölbungen der zwei zumindest teilweise gewölbten Wandelemente derart angeordnet und ausgebildet, dass sich die Wölbungen entsprechen. Vorzugsweise sind die Wölbungen der Wandelemente ineinander greifend angeordnet und insbesondere bevorzugt weisen die Wölbungen eine offene bzw. konkave und/oder eine geschlossene bzw. konvexe Seite auf und sind derart ausgebildet und ausgerichtet, dass die Wölbungen der Wandelemente mit ihren konkaven Seiten zueinander weisen. Die Wölbungen sind zweckmäßig zumindest teilweise dreidimensional gewölbt.

Die Flächenkonstruktion bildet zwischen den zwei Wandelementen zumindest teilweise einen Hohlraum. Der Hohlraum ist vorzugsweise evakuiert oder vakuumiert. Dies schließt vorzugsweise ein, dass der Druck im Hohlraum geringer ist als der an den Außenseiten der Wandelemente anliegende Druck. Bevorzugt liegt an der Außenseite der Wandelemente, Atmosphärendruck an, wobei der im Hohlraum herrschende Druck geringer ist als der Atmosphärendruck. Der Druck im Holraum beträgt vorzugsweise weniger als ca. 10⁻⁴ bar, bevorzugt zwischen 10⁻⁴ bar und 10⁻⁶ bar. Insbesondere ist der Druck im Hohlraum der Flächenkonstruktion geringer als in konventionellen Vakuum-Isolier-Paneelen.

Vorzugsweise ist das mindestens eine Verbindungselement ein Zugelement, das die gegenüberliegenden Wandelemente so miteinander verbindet, dass das Verbindungselement im Wesentlichen auf Zug beansprucht ist.

Das Verbindungselement erstreckt sich bevorzugt zumindest teilweise geneigt zu den Wandelementen. Insbesondere kann sich das Verbindungselement abwechselnd von einem zum anderen Wandelement erstrecken. Das bzw. die Verbindungselement(e) weist/weisen vorzugsweise eine Zick-Zack-Form auf bzw. sind in dieser angeordnet. Vorzugsweise ist das Verbindungselement zwischen den ineinandergreifenden gewölbten Abschnitten der Wandelemente angeordnet. Das Verbindungselement ist weiterhin bevorzugt faden- oder schnurartig ausgebildet und weist besonders bevorzugt Fasern, Garn, Glasfaser, Kevlar- bzw. Aramidfasern, Zwirn, und/oder Draht bzw. Drähte auf.

Bevorzugt weist die Flächenkonstruktion ein oder mehrere Verbindungselemente auf, das, die bzw. deren Abschnitte sich zwischen den Wandelementen erstrecken. Besonders bevorzugt verlaufen Abschnitte der Verbindungselemente und/oder die Verbindungselemente im Wesentlichen winklig, vorzugsweise etwa orthogonal zueinander. Zweckmäßig sind die Verbindungselemente bzw. -abschnitte im Wesentlichen gleichmäßig zwischen und entlang der Wandelemente angeordnet. Das bzw. die Verbindungselement(e) nehmen ferner vorteilhaft einen Großteil bzw. vorzugsweise im Wesentlichen sämtliche zwischen den Wandelementen wirkende Lasten auf. Das bzw. die Verbindungselement(e) ist/sind vorzugsweise derart angeordnet, dass angreifende äußere Drucklasten sowie durch das Vakuum auf die Wandelemente wirkende Flächenlasten im Wesentlichen durch Zugkräfte abgeleitet werden.

Bevorzugt kann somit eine Flächenkonstruktion ausgeführt werden, die die an den Wandelementen angreifenden Kräfte im Wesentlichen richtungsunabhängig mittels des bzw. der Verbindungselement(e) vorteilhaft aufnehmen kann. Vorzugsweise weist das Verbindungselement, zumindest abschnittsweise, eine definierte Elastizität auf. Zweckmäßig ist das Verbindungselement so ausgeführt, dass es vor der Montage und/oder Belastung im Wesentlichen lastfrei ist und/oder sich im Wesentlichen parallel zu einem Wandelement bzw. den Wandelementen erstreckt. Insbesondere verläuft das mindestens eine Verbindungselement zweckmäßig in einem im Wesentlichen unbeanspruchten Zustand, beispielsweise vor der Montage, im Wesentlichen geradlinig und/oder im beanspruchten Zustand, beispielsweise im montierten und/oder evakuierten Zustand, im Wesentlichen diagonal zu den Wandelementen und/oder nimmt einen Zick-Zack-Verlauf ein. Ferner zweckmäßig ist eine Ausgestaltung der Erfindung, bei der das Verbindungselement derart elastisch verformbar ist, dass das mindestens eine Verbindungselement im unbeanspruchten Zustand im Wesentlichen geradlinig verläuft und/oder im beanspruchten Zustand im Wesentlichen diagonal zu den Wandelementen ausgebildet ist und/oder eine Zick-Zack-Form einnimmt.

Die Flächenkonstruktion ermöglicht somit bevorzugt vorteilhaft eine einfache Montage. Beispielsweise besonders bevorzugt ist eine Vormontage des bzw. der Verbindungselemente dergestalt möglich, dass das bzw. die im vormontierten Zustand im Wesentlichen unbelastete Verbindungselement(e) während der Montage durch zumindest abschnittsweise elastischer Verformung ihre endgültige Position einnehmen und die Wandelemente gegeneinander abstützt/abstützen.

Die Wandelemente weisen vorzugsweise mehrere, vorzugsweise regelmäßige, Wölbungen bzw. Vertiefungen auf. Insbesondere vorteilhaft sind die Wölbungen zumindest abschnittsweise wannenförmig, becherförmig, schalenartig, mehrdimensional gekrümmt und/oder kalottenförmig ausgebildet. Die Wölbungen bzw. Vertiefungen sind vorzugsweise durch Prägen und/oder Umformen in ein in der Ausgangsform flaches Wandelement einbringbar. Die Wandelemente haben vorzugsweise eine etwa eierkartonartige Struktur. Insbesondere sind die Wandelemente vorzugsweise derart ausgebildet, vorzugsweise durch die beschriebenen Wölbungen bzw. Vertiefungen, dass ein Ineinandergreifen gegenüberliegender Wandelemente ermöglicht wird. Mit anderen Worten, vorzugsweise sind die Wandelemente der erfindungsgemäßen Flächenkonstruktion derart ausgebildet und/oder zueinander angeordnet, dass die zum jeweilig gegenüberliegenden Wandelement weisenden äußeren Flächen bzw. Bereiche des Wandelements in Richtung des gegenüberliegenden Wandelements hinter den entsprechenden äußeren Flächen bzw. Bereichen des gegenüberliegenden Wandelements liegen. Die Wandelemente greifen also ineinander.

Vorteilhafterweise können in einer erfindungsgemäßen Flächenkonstruktion die an den Wandelementen angreifenden Kräfte somit auf einfache Art und Weise aufgenommen und innerhalb der Wandelemente weitergeleitet werden und/oder als Zugkräfte in die Verbindungselemente eingebracht werden. Dadurch lässt sich besonders bevorzugt ein leichter, raumsparender und stabiler Aufbau mit überdies hervorragenden mechanischen und/oder thermischen Eigenschaften realisieren.

Weiterhin vorzugsweise sind die Wandelemente zumindest abschnittsweise gasdicht ausgebildet. Diese Ausgestaltung hat bevorzugt insbesondere den Vorteil, dass keine zusätzlichen Vorkehrungen zur Abdichtung der Flächenkonstruktion vorgesehen werden müssen. Ein leichter und raumsparender Aufbau wird somit ermöglicht.

Vorzugsweise weist die Flächenkonstruktion zumindest bereichsweise zumindest eine Beschichtung auf, die besonders bevorzugt zumindest Infrarotstrahlen reflektiert. Ferner sind die Wandelemente vorzugsweise zumindest teilweise transparent. Zweckmäßig sind die Wandelemente zumindest teilweise umgeformte und/oder gegossene Wandelemente. Insbesondere vorteilhaft umfasst das Material der Wandelemente ein Metall, bevorzugt ein Leichtmetall und besonders bevorzugt Aluminium. Ferner vorteilhaft beträgt die Dicke der Wandelemente mindestens etwa 0,03 .mm bis 3 mm, bevorzugt etwa 0,1 mm bis 0,3 und besonders bevorzugt etwa 0,12 mm.

Das mindestens eine Strahlungsschild wird von dem/den Verbindungselement(en) durchdrungen und/oder durch diese gestützt. Vorteilhaft steht das Strahlungsschild an Stellen mit im Wesentlichen gleichen Temperaturniveaus der Verbindungselemente mit diesen in Kontakt. Besonders bevorzugt verläuft das mindestens eine Strahlungsschild zwischen den Wandelementen entlang Bereichen mit annähernd gleichem Temperaturniveau. Zweckmäßig ist das mindestens eine Strahlungsschild zumindest abschnittsweise folienartig ausgebildet. Vorteilhaft umfasst das mindestens eine Strahlungsschild eine bedampfte Folie. Vorzugsweise ist das mindestens eine Strahlungsschild homogen und besonders bevorzugt als durchgehend geschlossenes Strahlungsschild und ferner bevorzugt als durchgehend geschlossene Folie ausgebildet, wobei es sich vorzugsweise vollständig bzw. vollflächig zwischen den bzw. entlang der Wandelemente/n erstreckt. Vorzugsweise weist das mindestens eine Strahlungsschild mehrere reflektierende Schichten auf.

Eine derartige Flächenkonstruktion vermindert bevorzugt vorteilhaft den Kälte- oder Wärmeaustausch, bspw. durch zirkulierende Gase, die Kälte oder Wärme von einem Wandelement zum anderen Wandelement transportieren.

Das mindestens eine Strahlungsschild unterstützt vorzugsweise die zumindest teilweise Reflektion und/oder Absorption von Wärmestrahlung und/oder die zumindest teilweise Reflektion bzw. Absorption von Schall bzw. Schallwellen. Das Strahlungsschild verbessert somit die Isolationseigenschaften des erfindungsgemäßen Bauteils.

Insbesondere vorteilhaft kann durch die, zumindest teilweise, Entkopplung der Funktion "Wärme- und/oder Schallisolation", die zumindest teilweise und/oder abschnittsweise vom Strahlungsschild wahrgenommen wird, von der Funktion "Verbindung der Wandelemente und die damit einhergehende Kraftübertragung", das Strahlungsschild und das Verbindungselement bezüglich ihrer Anordnung und Ausbildung ihrem Zweck entsprechend optimiert werden. Das bedeutet insbesondere, dass das Strahlungsschild zumindest bezüglich der Wärmeisolation und/oder der Schallisolation optimiert angeordnet bzw. ausgebildet ist. Dabei ist beispielsweise das Strahlungsschild hinsichtlich der Reflektion bzw. Absorption von Wärmestrahlung bzw. Schallwellen und/oder hinsichtlich Wärmeleitung optimiert angeordnet.

Die Erfindung ermöglicht weiterhin vorzugsweise, dass das mindestens eine Strahlungsschild das mindestens eine Verbindungselement vor und/oder bei der Montage positioniert bzw. fixiert und zwar besonders bevorzugt in einem im Wesentlichen unbelasteten Zustand. Alternativ oder zusätzlich fixiert oder stützt das Verbindungselement das mindestens eine Strahlungsschild im montierten und/oder evakuierten Zustand. Das Strahlungsschild ist dabei bevorzugt im Wesentlichen unbelastet bzw. übernimmt keine stützende Funktion.

Das Strahlungsschild ist vorzugsweise vorgeformt. Besonders vorteilhaft ist das Strahlungsschild seiner Lage in der Flächenkonstruktion entsprechend derart vorgeformt, dass es zwischen den Wandelementen und/oder zwischen Wandelement und/oder einem oder mehreren anderen Strahlungsschildern positioniert werden kann, vorzugsweise dem Verlauf der Wandelemente/Stahlungsschilder folgend, ohne diese zu berühren. Besonders bevorzugt weist das mindestens eine Strahlungsschild dabei eine Formstabilität bzw. -steifigkeit auf, die zumindest abschnittsweise ein selbsttragendes Strahlungsschild sicherstellt, ggf. unterstützt durch die Verbindungselemente.

Eine solche Flächenkonstruktion ermöglich insbesondere einen Aufbau, der sich besonders zur vorteilhaften Vormontage der Flächenkonstruktion eignet, und/oder der bevorzugt eine einfache, schnelle und/oder kostengünstige Montage ermöglicht. Zudem erlaubt der erfindungsgemäße Aufbau eine besonders effektive Isolation.

Die Flächenkonstruktion weist vorzugsweise zumindest teilweise Materialien mit textilen Eigenschaften auf und/oder eignet sich zur textilen Anwendung. Besonders vorteilhaft eignet sich die Flächenkonstruktion für thermische Solaranlagen und/oder architektonische Elemente, insbesondere Lichtelemente bzw. ist als derartiges Element ausgebildet. Die Flächenkonstruktion ist unter anderem ferner in folgenden Bereichen einsetzbar: Großflächeneinsatz (insbesondere im Bausektor wie beispielsweise Passivhaus), Kältebrücken (Bausanierung), Kühl- und/oder Heizmöbel, Kleidungsstücke, Schuhe, Kühlfahrzeuge, Fahrzeugaußenhautisolationen, passive Transportbehälter (z.B. für Organtransplatationen), Behälterisolationen für Flüssiggaslagerung oder -transport (z.B. Liquid Natural Gas), diverse cryogene, insbesondere flächige, Anwendungen, wie beispielsweise Behälter (z.B. H2-Tank, Supraleitung), Isolation, Leichtbau, Schallschutz und/oder Schwingungsentkopplung. Zweckmäßig ist die Flächenkonstruktion zumindest teilweise als eine Sandwich-Konstruktion und/oder zumindest teilweise als eine räumliche Fachwerkstruktur ausgebildet. Vorzugsweise sind die Flächenkonstruktionen als kleinformatige Standardpaneele mit einer Größe von ca. 0,5 m² ausgebildet.

Das mindestens eine Verbindungselement ist mit den Wandelementen an mindestens einer Verbindungsstelle verbunden, wobei sich diese Verbindungsstelle bevorzugt in einem Auflagerpunkt der Wandelemente befindet. Der Auflagepunkt bzw. die Auflagerstelle im Lichte der vorliegenden Anmeldung bezeichnet insbesondere den Bereich bzw. die Stelle, an der Auflager- bzw. Stützkräfte vorteilhaft in das Wandelement eingeleitet werden können. Insbesondere stellt der Auflagepunkt insbesondere den Bereich bzw. die Stelle dar, in dem bzw. an der die im Wandelement wirkenden Druckkräfte in bzw. auf das im Zugelement wirkende Zugkräfte übergehen.

Insbesondere vorteilhaft ist das mindestens eine Verbindungselement mit dem Wandelement fest bzw. nicht-gleitend verbunden. Bevorzugt ist also das Verbindungselement gegenüber dem Wandelement fixiert bzw. sind Wandelement und Verbindungselement nicht gegeneinander beweglich. Vorzugsweise sind mehrere Verbindungselemente im Bereich einer Verbindungsstelle mit dem Wandelement verbunden, wobei die Verbindungselemente vorzugsweise nicht miteinander in Kontakt stehen. Ferner erstrecken sich mehrere mit einem Wandelement verbundene Verbindungselemente, die besonders bevorzugt im Bereich einer Verbindungsstelle eines Wandelementes mit diesem verbunden sind, bevorzugt in unterschiedliche Richtungen.

Vorzugsweise sind zwei oder mehr Verbindungselemente, die im Bereich einer Verbindungsstelle mit dem einen Wandelement verbunden sind, an jeweils anderen Verbindungsstellen mit dem anderen Wandelement verbunden.

Eine derartige Flächenkonstruktion weist bevorzugt keinen oder nur geringen Verschleiß, bspw. durch aneinander reibende und relativ zueinander bewegliche Komponenten auf. Vorzugsweise sind somit langlebige und/oder leichte Konstruktionen realisierbar.

Die Verbindungsstelle ist vorzugsweise als Nut bzw. Aussparung ausgebildet. Die Nut ist bevorzugt mit einem Radius versehen, der eine zur Umleitung der Zugkräfte geeignete Unlenkung des Verbindungselements erlaubt und/oder eine Führung des Verbindungselements mit geringer Flächenpressung und/oder inneren Stauchung des Verbindungselements ermöglicht. Ferner zweckmäßig ist eine wannenförmige Ausgestaltung der mindestens einen Verbindungsstelle. Der Umlenkradius ist insbesondere abhängig von den mechanischen Eigenschaften des Zugelements.

Die Verbindungsstelle umfasst beispielsweise mindestens eine, vorzugsweise mindestens zwei, vorzugsweise versetzt und bevorzugt (geringfügig) höhenversetzt zueinander angeordnete, Nuten. Besonders vorteilhaft verlaufen die Nuten einer Verbindungsstelle winkelig, insbesondere rechtwinklig, und/oder höhenversetzt zueinander. Dies erlaubt insbesondere das Vorsehen zweier oder mehrerer Verbindungselemente an einer Verbindungsstelle, wobei sich die Verbindungselemente kreuzen und übereinander verlaufen, ohne sich zu berühren und/oder aneinander zu pressen. Bevorzugt ist der Auflagerpunkt als konkave Nut in Richtung quer zum Verbindungselementverlauf und mit konvexer Krümmung längs zum Verbindungselement- bzw. Faserverlauf des Verbindungselements ausgebildet. Hierdurch kann das Verbindungselement insbesondere mit geringer Flächenpressung und geringer Biegebelastung umgelenkt werden. Die Verbindungsstelle ist vorzugsweise als zumindest teilweise wulst- bzw. torusförmige Nut bzw. Aussparung ausgebildet.

Die erfindungsgemäße Ausbildung des Auflagerpunkts erlaubt insbesondere, negative Effekte, die aus kreuzenden Verbindungselementen resultieren, wie bspw. Kerbwirkungen sich berührend kreuzender Verbindungselemente, zu vermeiden. Zudem kann somit, durch die geringe Flächenpressung und dem angepassten Biegeradius, die zulässige Spannlast der Zugelemente erhöht werden.

Ferner vorteilhaft ist die zumindest eine Nut zumindest teilweise konkav und/oder konvex ausgebildet. Zweckmäßig sind Verbindungsstellen eines Wandelements zu entsprechenden Verbindungsstellen des anderen bzw. gegenüberliegenden Wandelements komplementär ausgeführt. Dies erlaubt insbesondere einen parallelen Verlauf von Zugelementen in einer Ebene, ohne diese zu verflechten.

Insbesondere vorteilhaft ist zumindest eine Nut sich zu ihrer Öffnungsseite hin zumindest bereichsweise erweiternd ausgebildet. Vorteilhaft eignet sich mindestens eine Nut, zumindest ein in ihr aufgenommenes Verbindungselement zu führen, zu zentrieren, zu halten und/oder zu klemmen.

Die erfindungsgemäße Flächenkonstruktion umfasst bevorzugt zwei Wandelemente mit jeweils mehreren Verbindungsstellen, die bevorzugt in den Auflagerpunkten angeordnet sind. Hierbei nehmen bevorzugt die Abstände zwischen benachbarten Verbindungsstellen eines Wandelementes zum Randbereich der Flächenkonstruktion hin allmählich ab. Insbesondere nimmt vorzugsweise die Größe der Wölbungen, insbesondere deren Projektionsfläche in der Draufsicht auf einzelne Wölbungen bzw, der Rasterabstand bzw. die Spannweite der Wölbungen zum Rand der Flächenkonstruktion hin und insbesondere quer zum Randverlauf, schrittweise ab. Dabei ist die Abstandsabnahme, besonders der Kalottenspannweite, vorzugsweise abhängig von der jeweiligen Abnahme im jeweils vorgelagerten Krafteinleitungspunkt. Vorzugsweise ist die Abnahme abhängig von der möglichen, vorzugsweise tangentialen, Lastaufnahme der Verbindungselemente, bspw. durch Reibung bzw. anderer Mechanismen wie Klemmen oder Kleben, im Auflagerpunkt, wodurch die die Verbindungselementspannung reduziert werden kann, was in der Auflagekraft des nachfolgenden Auflagerpunktes berücksichtigt werden kann. Dies kann erfolgen durch die Reduzierung der Rasterbreite. Besonders vorteilhaft bleibt parallel zum Randverlauf die Rasterung bzw. der Rasterabstand bzw. die Spannweite der Wölbungen unverändert. Die Wandelemente weisen also bevorzugt im Randbereich bzw. zum Rand hin eine Struktur mit ellipsoiden Wölbungen bzw. in der Projektion der Draufsicht einzelner Wölbungen eine längliche Form auf, insbesondere wenn in den Mittelbereichen der Wandelemente Formen mit im Wesentlichen gleichseitigen Projektionsflächen vorgesehen sind. Bevorzugt vorteilhaft kann somit die Spannung der Zugelemente soweit reduziert werden, bis die Spannung eine zuverlässige Befestigung erlaubt.

Eine bevorzugte Ausbildung der Flächenkonstruktion umfasst einen im Randbereich angeordneten Rahmen bzw. Randverbund, in bzw. an dem die Wandelemente und/oder das Strahlungsschild miteinander verbunden sind. Vorzugsweise sind die Wandelemente und/oder das Strahlungsschild am Randbereich zumindest teilweise gequetscht, verschweißt und/oder auf sonstiger Art mit einander verbunden. Besonders vorteilhaft sind die Komponenten der Flächenkonstruktion, insbesondere die Wandelemente, das Strahlungsschild und/oder das mindestens eine Verbindungselement zumindest abschnittsweise gasdicht miteinander verschweißt. Somit ist bevorzugt vorteilhaft auf einfache Art und Weise bevorzugt kostengünstig zumindest abschnittsweise ein Randabschluss der Flächenkonstruktion realisierbar.

Der Randverbund der Flächenkonstruktion umfasst vorzugsweise zumindest teilweise ein Mittel zur Wärmetrennung bzw. Wärmedämmung, insbesondere mittels Füllstoffen und besonders bevorzugt mittels mikroporösen Füllstoffen. Zweckmäßig ist im Randverbund das Prinzip von Vakuum-Isolierpaneelen (VIP) zumindest teilweise bzw. abschnittsweise realisiert. Bevorzugt vorteilhaft ermöglicht der Randverbund somit eine gute Wärmedämmung im Randbereich der Flächenkonstruktion, insbesondere da keine Berührung der beiden Deckflächen besteht. Vorzugsweise umfasst der Randverbund einen Rahmen und/oder Mittel zur Wärmetrennung bzw. Wärmedämmung. Vorzugsweise umfasst der Rahmen bzw. Rahmenverbund Füllstoffe im Inneren und ist besonders bevorzugt als Vakuum-Isolierpaneele ausgebildet. Ferner weist er bevorzugt eine Barriere bzw. Wand bzw. Hülle zwischen seinem Inneren und dem Hohlraum der Flächenkonstruktion auf. Insbesondere kann als Barriere eine Folie eingesetzt werden. Zwischen dem Inneren und dem evakuierten bzw. vakuumierten Hohlraum der Flächenkonstruktion kann vorzugsweise ein Druckunterschied bestehen.

Die Barriere ist vorzugsweise zumindest bereichsweise bogenförmig und/oder biegesteif ausgebildet. Ferner können bevorzugt weitere Stützstrukturen oder Mittel vorgesehen sein, um aus dem Druckunterschied zwischen Hohlraum und Inneren der Hälften resultierende Lasten zumindest teilweise aufzunehmen. Die Stützstrukturen oder Mittel verhindern also beispielsweise und bevorzugt, dass sich die als Folie ausgebildete Hülle einer Hälfte ablöst und nach innen in den Hohlraum der Flächenkonstruktion hinein aufbläht.

Der Randverbund bzw. Rahmen ist vorzugsweise geeignet, als Montagehilfe für mindestens ein Strahlungsschild und/oder für mindestens ein Verbindungselement zu dienen. Der Randverbund als Montagehilfe kann dabei als Montagerahmen ausgeführt sein, der einen Verbund der Komponenten der Flächenkonstruktion, beispielsweise mindestens eines der Wandelemente, mindestens ein Strahlungsschild und/oder mindestens ein Verbindungselement umfassend, darstellt. Der Randverbund als Montagehilfe kann aber auch ein zusätzliches Element darstellen, welches zumindest abschnittsweise im Randbereich angeordnet ist und ebenso wie beispielsweise ein zusätzlicher Montagerahmen zur Montage der Flächenkonstruktion dienen kann. Insbesondere bevorzugt kann der Randverbund die Funktionen Montagehilfe und Mittel zur Schall- und/oder Wärmetrennung bzw. -dämmung zumindest abschnittsweise in einem integrierten Randverbund vereinen.

Ein so ausgebildeter Randverbund einer Flächenkonstruktion ermöglich vorteilhaft eine zumindest abschnittsweise gasdichte, gut Wärme und/oder Schall dämmende bzw. isolierende und/oder mechanisch belastbare Konstruktion im sowohl thermisch als auch mechanisch hochbeanspruchten Randbereich, in dem die Flächenkonstruktion bevorzugt an angrenzende Bauteile zumindest abschnittsweise montiert ist.

Zweckmäßig ist die Flächenkonstruktion ferner im Wesentlichen zumindest teilweise homogen aufgebaut. Die außen an die Flächenkonstruktion angreifenden Kräfte sind vorteilhaft weitgehend durch die aus zwei Wandelementen und mindestens einen Verbindungselement gebildeten Struktur im Wesentlichen durch Zug- und/oder Druckkraftbeaufschlagung abgetragen.

Die vorliegende Aufgabe wird ferner gelöst durch ein Verfahren zur Herstellung einer Flächenkonstruktion, insbesondere nach einem der vorhergehenden Ansprüche, mit den folgenden Schritten:
- Bereitstellen von Wandelementen;
- Bereitstellen von mindestens einem Strahlungsschild sowie von mindestens einem Verbindungselement; und
- Anordnen von mindestens einem Strahlungsschild sowie von mindestens einem Verbindungselement, insbesondere zwischen den Wandelementen.

In einer weiteren Ausgestaltung eines Verfahrens zur Herstellung einer Flächenkonstruktion zur Wärme- und/oder Schallisolation mittels Vakuum umfasst ein Verfahren die folgenden alternativen und/oder zusätzlichen Schritte:
- Bereitstellen von zwei zumindest teilweise gewölbten Wandelementen und mindesten einem Strahlungsschild sowie von mindestens einem Verbindungselement;
- Anordnen der Wandelemente derart, dass die Wölbungen der Wandelemente, zueinander versetzt und vorzugsweise ineinandergreifend angeordneten sind;
- Anordnen von mindestens einem Strahlungsschild sowie von mindestens einem Verbindungselement zwischen den Wandelementen, besonders zwischen den Wölbungen der Wandelemente, derart, dass das mindestens eine Verbindungselement die Wandelemente unter Aufnahme von Zugkräften miteinander verbindet und gegeneinander abstützt.

Zweckmäßig umfasst das Verfahren das Bereitstellen von mindestens einem Verbindungselement, welches mindestens ein Strahlungsschild durchdringt. Gemäß einer weiteren Ausgestaltung des Verfahrens erstreckt sich mindestens ein Verbindungselement vor und/oder am Anfang der Montage im Wesentlichen parallel zu zumindest einem der Wandelemente und/oder mindestens einem Strahlungsschild, bzw. kann sich derart erstrecken.

Vorteilhaft weist das Verfahren ferner den Schritt auf, dass der zwischen den Wandelementen befindliche Raum zumindest teilweise evakuiert bzw. vakuumiert wird. Dem vorangehend kann ein oben beschriebener Randbereich ausgebildet werden bzw. ein entsprechender Rahmen angebracht werden.

Vorzugsweise umfasst das Bereitstellen von mindestens einem Strahlungsschild sowie von mindestens einem Verbindungselement eine Vormontage von zumindest einem Strahlungsschild und zumindest einem Verbindungselement zu zumindest einer Einheit. Zweckmäßig umfasst das Verfahren den Schritt, wonach bei der Vormontage die Durchdringung von mindestens einem Strahlungsschild mit mindestens einem Verbindungselement derart erfolgt, dass in eingebautem Zustand bzw. nach der Montage die Berührung zwischen mindestens einem Strahlungsschild und mindestens einem Verbindungselement an Stellen mit im wesentlichen gleichem Temperaturgradient erfolgt.

Das Verfahren umfasst ferner vorzugsweise den Schritt: Vorformen von mindestens einem Strahlungsschild, insbesondere in eine der Kontur der Wandelemente entsprechen Form, wobei die Form vorzugsweise der Lage des Strahlungsschilds zwischen den Wandelementen angepasst ist.

In einer weiteren Ausführungsform weist das Verfahren zusätzlich den Schritt auf, wonach ein Rahmen, vorzugsweise mit Füllstoffen, bevorzugt in den Randbereichen der Flächenkonstruktion zumindest abschnittsweise angeordnet wird.

Nach einer weiteren Ausgestaltung des Verfahrens geschieht das Anordnen von mindestens einem Strahlungsschild sowie von mindestens einem Verbindungselement zwischen den Wandelementen durch Anordnen mindestens einer Einheit aus Strahlungsschild und Verbindungselement. Zweckmäßig kann eine Einheit neben mindestens einem Strahlungsschild und mindestens einem Verbindungselement auch weitere Komponenten umfassen.

Eine weitere Ausgestaltung des Verfahrens umfasst einen Schritt, wonach zumindest teilweise ein Randverbund der Flächenkonstruktion zumindest abschnittsweise durch Quetschen, Schweißen und/oder Kleben ausgebildet wird.

Zweckmäßig umfasst das Verfahren in einer weiteren Ausgestaltung zusätzlich den Schritt des Evakuierens bzw. Vakuumierens des zwischen den Wandelementen befindlichen Raumes.

Das Verfahren umfasst vorzugsweise ferner das Überführen der Position mindestens eines Verbindungselements von einer im Wesentlichen parallel zu mindestens einem der Wandelemente und/oder mindestens einem Strahlungsschild ausgerichteten Position zumindest abschnittsweise in eine im Wesentlichen nicht parallel zu mindestens einem der Wandelemente und/oder dem Strahlungsschild erstreckenden Position.

Insbesondere vorteilhaft kann dabei zumindest abschnittsweise mindestens ein Verbindungselement zumindest abschnittsweise so ausgerichtet werden, dass es sich abwechselnd von einem zum anderen Wandelement erstreckt, besonders bevorzugt verlaufen dabei Abschnitte des Verbindungselementes und/oder Abschnitte von mehreren Verbindungselementen und/oder mehrere Verbindungselemente im Wesentlichen orthogonal und/oder winkelig zueinander.

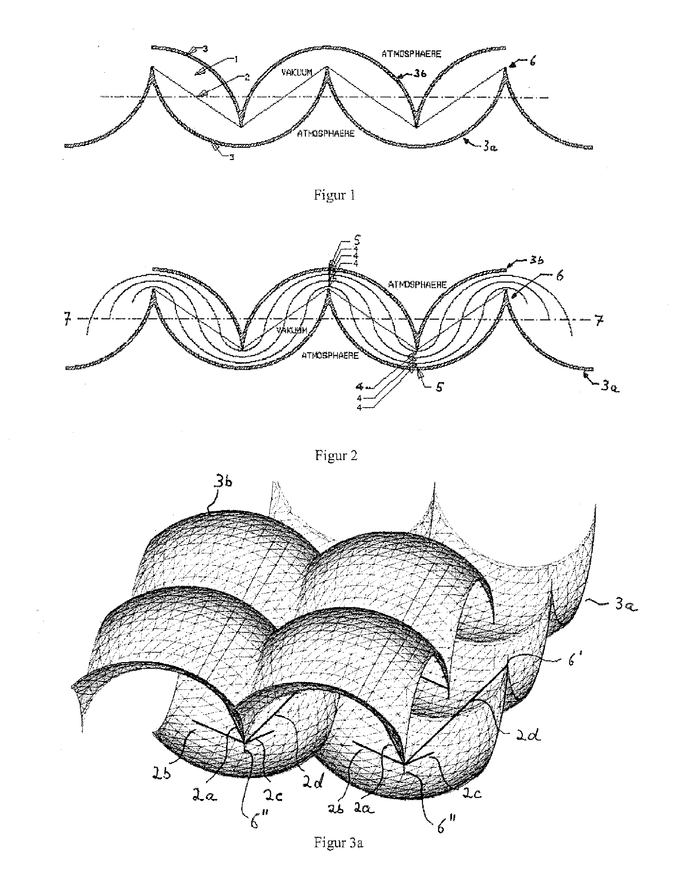

Die mit der Erfindung bevorzugt erzielten Vorteile liegen insbesondere darin, dass sich eine Vereinfachung des Systems ergibt, das im Wesentlichen nur noch aus drei Komponenten besteht. Diese sind Wandelemente, Strahlungschild(er) und Verbindungselement(e). Vorzugsweise vereinfacht sich damit zusätzlich die Montage des Systems und es ist vorteilhaft bevorzugt möglich (ein) Strahlungsschild(er) in die Konstruktion mit einzubringen. Eine insbesondere als ein- oder mehrlagiges Strahlungsschild ausgebildete Folienschicht dient bevorzugt darüber hinaus der Fixierung mindestens eines Verbindungselementes bzw. der Zugelemente (Fasern, Garne) und vereinfacht bevorzugt die Montage. Es besteht bevorzugt die Möglichkeit, durch Abstimmung der Geometrie, insbesondere dem Verhältnis Durchgriff zu Stützweite entsprechend dem Kräftedreieck in Figur 1 auf die Materialeigenschaft des/der Zugelemente(s), die Konstruktion so zu beeinflussen, dass die Fasern bei Beginn der Montage in lastfrei gestreckter Lage liegen können und erst durch die elastische Verformung ihre endgültige Zick-Zack-Form einnehmen. Bevorzugt sind dabei Fasern mit hoher zulässiger Zugspannung (σ_{zul}) bei niedrigem E-Modul, also mit großer elastischer Dehnung bei gleichzeitig hoher Festigkeit. Die Wärmeübertragung durch die Zugelemente ist im Wesentlichen proportional zur spezifischen Wärmeleitung der Zugelemente. Damit wird die Wärmeübertragung durch das bzw. die Zugelement(e) überwiegend durch die drei Materialkennwerte E-Modul, zulässige Zugspannung (σ_{zul}) und spezifischen Wärmeleitung bestimmt. Bevorzugt sind daher niedermodulare hochfeste Fasern mit geringer spezifischer Wärmeleitung als Zugelemente vorgesehen.

Die Flächenkonstruktion ist bevorzugt symmetrisch aufgebaut. Die Längen und/oder Dehnlängen des Zugelementes und/oder der Verbindungselementabschnitte zwischen den Auflagerpunkten sind bevorzugt im Wesentlichen gleich.

Es werden bevorzugt gleitende Bewegungen an den Stützstellen vermieden die zur Werkstoffschädigung führen können.

Bevorzugt vorteilhaft läst bzw. lassen sich somit mindestens ein Strahlungsschild bzw. Schichten (Multilayer) in die Flächenkonstruktion einbringen, insbesondere lassen sich durchgehend geschlossene Folien bzw. Strahlungsschilder realisieren, die von Kräften übertragenden Elemente durchdrungen sind. Die Isolationseigenschaften des Bauelements können somit bei gleichzeitig raumsparender Ausbildung und einfachem, kostengünstigem Aufbau verbessert werden.

Die vorliegende Erfindung stellt ein alternatives und/oder verbessertes System einer Vakuumisolierung dar, welches die thennischen Vorteile von Vakuumisolationen mit einem einfachen und kostengünstigen Aufbau verbindet und geeignet ist, plane und/oder frei geformte Flächen auszubilden. Der Einsatzbereich bzw. die Verwendung des erfindungsgemäßen Gegenstands erstreckt sich, ggf. durch Variation der jeweiligen Parameter, über wesentliche Gebiete in denen thermische und/oder akustische Isolierungen zum Einsatz kommen. Dies ist beispielsweise der Bereich Gebäude- und Objektdämmung, Kühl-, Gefrier-, Heizgeräte, Tieftemperatur und/oder Transport.

Eine Fixierung des Strahlungsschilds bzw. vorzugsweise der Fasermatrix ist bevorzugt vorteilhaft nur an den Rändern der Paneele notwendig. Die Deckflächen erhalten durch ihre dreidimensionale, bspw. im Wesentlichen kalottenförmige Gestaltung, eine steife bis sehr steife Struktur, wobei Biegekräfte aufgrund des Luftdrucks in der Deckfläche weitgehend vermieden werden. Aus diesem Grunde kann bevorzugt vorteilhaft mit sehr geringen Wandstärken eine ausreichende Stabilität erreicht werden.

Die durchgehende und vorzugsweise im Wesentlichen orthogonale Matrixstruktur des bzw. der Verbindungselement(s) bzw. Fasern in Verbindung mit den Wandelementen bzw. Deckschichten führt insbesondere dazu, dass Schubkräfte der Deckflächen gegeneinander im Wesentlichen abgetragen werden. Dies führt, auf die gesamte Paneele bzw. Flächenkonstruktion bezogen, zu einer biegesteifen Konstruktion vergleichbar einer Sandwichbauweise. Die Konstruktion weist somit bevorzugt vorteilhaft ein geringes Flächengewicht, insbesondere bei hoher Steifigkeit und guten Isolationseigenschaften auf.

Durch Variation der Konstruktionselemente in Material, Dimension und Geometrie lassen sich die Eigenschaften des Flächenelements beeinflussen. Vorzugsweise werden Gettermaterialien zur Erzeugung und Aufrechterhaltung des notwendigen Vakuums vorgesehen bzw. verwendet.

Vorzugsweise ist bzw. sind die vorzugsweise abdichtenden Deckfläche bzw. die Wandelemente in die Kraftübertragung zumindest teilweise integriert. Vorzugsweise ist ferner mindestens ein Strahlungsschild, vorzugsweise eine reflektierende Folie, insbesondere zur Reduzierung des Strahlungsanteils, vorgesehen.

Mindestens ein Strahlungsschild, mindestens eine oder mehrere Multilayer-Reflexionsschicht(en) können ferner bevorzugt vorteilhaft als Träger für mindestens ein Verbindungselement bzw. Zugelement(e), insbesondere im vormontiertem Zustand, dienen.

Zweckmäßig spannt bzw. spannen sich das mindestens eine Verbindungselement bzw. Zugelement(e), insbesondere durch die Endmontage, in ihre insbesondere endgültige Fachwerk-Form, die für die Statik vorteilhaft sein kann. Mindestens ein Strahlungsschild bzw. eine Multilayerschicht wird vorzugsweise entlastet und füllt vorzugsweise locker den Raum, insbesondere ohne Überlappungen oder Lücken. Die Zweidimensionalität der Tragstruktur kann auf eine räumliche Stützstruktur mit insbesondere orthogonal oder winkelig angeordneten Verbindungs- bzw. Zugelementen erweitert sein. Vorzugsweise entsteht eine in allen Richtungen steife Struktur, insbesondere der Deckflächen, ähnlich einem räumlichen Fachwerk oder einer Sandwich-Konstruktion.

Die Struktur, bevorzugt die kalottenförmige Struktur, der Deckfläche bildet ein dreidimensionales Gewölbe, wodurch ein Großteil der Kräfte des atmosphärischen Drucks gezielt in die orthogonal bzw. winkelig zueinander gespannten Verbindungs- bzw. Zugelemente geleitet werden, ähnlich wie bei Kirchen- oder Kathedralengewölben. Somit ist bevorzugt zumindest teilweise das Prinzip der Kirchen- oder Kathedralengewölbe auf die Deckfläche bzw. Wandelemente von atmosphärisch belasteten Vakuumisolierungen angewandt. Die Wandstärke, der Materialaufwand und/oder das Gewicht kann auf diese Weise bei gleichbleibender Stabilität und damit letztendlich Isolationswirkung bevorzugt vorteilhaft erheblich reduziert werden.

Eine bevorzugte, als Multilayerschicht ausgebildete, Strahlungsschildstruktur umfasst mindestens zwei übereinanderliegende Reflektionsschichten, die mit hochfesten Verbindungselementen bzw. Fasern durchdrungen sein kann. Durch die definierte Durchdringung von mindestens einem Strahlungsschild bzw. mindestens einer Muitilayerschicht bzw. Reflektionsschicht(en) mit mindestens ein Verbindungs- bzw. Zugelement(en) dienen diese als Träger für- und/oder zur Führung des Verbindungs- bzw. Zugelementes. Es kehrt sich die Führungs- und/oder Tragefunktion nach der Montage um und es dient mindestens ein Verbindungs- bzw. Zugelement(e) als Führung und/oder Fixierung von mindestens einem Strahlungsschild bzw. mindestens einer Multilayerschicht.

Mindestens ein Strahlungsschild bzw. mindestens eine Reflexionsschicht(en) kann als eine homogene und/oder durchgehende Fläche eingesetzt werden, insbesondere ohne Wärmebrücke aufzuweisen. Die Durchdringung von mindestens einem Strahlungsschild bzw. von mindestens einer Reflexionsschicht mittels Verbindungs- bzw. Zugelementen erfolgt zweckmäßig an Stellen ähnlicher Temperaturniveaus und minimiert damit bevorzugt und vorteilhaft den Wärmefluss quer zur Isolierung bzw. zu den parallelen Wandelementen.

Die Durchdringung von mindestens einem Strahlungsschild bzw. Multilayerschicht mit den geraden Verbindungs- bzw. Zugelementen bei der Vorfertigung erfolgt vorzugsweise diagonal durch mindestens ein bevorzugt vorgeformtes Strahlungsschild bzw. eine Multilayerschicht, insbesondere derart, dass im eingebautem Zustand die Berührung zwischen Zugelement und Multilayerschicht an Stellen mit ähnlichem Temperaturgradient erfolgt. Damit wird ein Wärmefluss quer zur Isolierung vorzugsweise weitgehend unterdrückt.

Die vorgefertigte Zwischenlage (Multilayer/Zugelementc) bildet während der Montage eine Einheit, welche die Lage der Zugelement als auch die Position des Strahlungsschilds bzw. der reflektierenden Multilayer-Schicht soweit fixiert, dass diese nur als Gesamtheit zwischen den Deckflächen positioniert zu werden brauchen. Die Montage mit der notwendigen Genauigkeit wird damit erheblich erleichtert.

Die Gestaltung der Wölbungen einer Flächenkonstruktion bzw. Vakuumisolierung ist vorzugsweise in zwei Achsen spiegelsymmetrisch und lässt sich in der Anzahl der Wölbungen bzw. Kalotten in beiden Richtungen beliebig verändern bzw. verlängern. Es ist daher bevorzugt möglich, beliebig breite und lange Flächenkonstuktionen bzw. Elemente zu erzeugen, die vorzugsweise in sich im Wesentlichen ohne resultierende Kräfte bleiben.

Lediglich im Randbereich der Flächenkonstruktion ist meistens eine Fixierung von mindestens einem Verbindungs- bzw. Zugelement(e) notwendig. Die in die Wandelemente bzw. Deckflächen eingeleiteten Kräfte werden auf der vorzugsweise homogenen Fläche vorzugsweise größtenteils oder vollständig durch die Kräfte des Gewölbes kompensiert. Die verbleibenden Kräfte, insbesondere der gegenüberliegenden Ränder, werden größtenteils durch die bevorzugt homogenen Wandelement bzw. Deckfläche durchgeleitet. Freie Kräfte treten im bevorzugt homogenen Flächenbereich nicht auf.

Ferner zweckmäßig sind die Auflagerpunkte im Übergang von Druck- zu Zugelement ausgebildet. Dieser Übergang hat vorzugsweise entscheidenden Einfluss auf die zulässigen Spannungen in den Zugelementen. Eine größtenteils abgerundete Ausbildung ist aufgrund der Umleitung der Zugkräfte vorteilhaft. Dabei ist der minimale Krümmungsradius ist weitgehend abhängig von den mechanischen Eigenschaften des Verbindungs- bzw. Zugelements. Es spielen sowohl Radius als auch Flächenpressung eine Rolle. Bevorzugt sind die Verbindungs- bzw. Zugelemente fixiert und die Auflagerpunkte mit mindestens einer insbesondere torusförmig ausgesparten Nut ausgeführt, in der das Verbindungs- bzw. Zugelement mit angemessenem Radius umgelenkt wird und/oder wannenförmig mit geringer Flächenpressung geführt wird.

Besonders in der dreidimensionalen Ausgestaltung sind die sich kreuzenden Verbindungs- bzw. Zugelemente nicht bzw. nicht berührend bzw. nicht pressend übereinander gelegt. Bevorzugt ist ferner, sich orthogonal kreuzende Verbindungs- bzw. Zugelemente in, insbesondere geringfügig, differierender Höhe anzuordnen. Bevorzugt verteilhaft lassen sich Kerbwirkungen von sich pressender Verbindung- bzw. Zugelemente vermeiden bzw. reduzieren. Durch die, insbesondere geringfügig, höhenversetzten konkaven und/oder konvexen Nuten mit, insbesondere auf der Gegenfläche, komplementär ausgeführten Nuten ist es möglich, jeweils die im Wesentlichen parallel verlaufenden Verbindungs- bzw. Zugelemente quasi in einer Ebene zu führen ohne sie zu verflechten.

Die Randbefestigung stellt im allgemeinen einen limitierenden Faktor für die maximale Festigkeit des/der Verbindungs- bzw. Zugelement(e) dar und hat damit entscheidenden Einfuß auf die Wirksamkeit der gesamten Flächenkonstruktion. Der Randbereich stellt eine kritische Zone dar, in der es notwendig ist, die Lasten des/der Verbindungs- bzw. Zugelemente effizient und bevorzugt ohne Festigkeitsverlust abzutragen.

Es ist zweckmäßig vorgesehen, den Rasterabstand der Wölbungen bzw. Kalotten im Randbereich quer zum Randverlauf schrittweise zu verringern. Dabei ist die Abnahme der Kalottenspannweite bevorzugt von der Abnahme im jeweils vorgelagerten Krafteinleitungspunkt abhängig. Also abhängig von den sich durch die Reibung (bzw. anderer Mechanismen wie Klemmen oder Kleben) möglicher tangentialen Lastaufnahme im Auflagerpunkt kann die Fadenspannung reduziert werden, was in der Auflagekraft des nachfolgenden Auflagerpunktes vorzugsweise berücksichtigt ist. Dies erfolgt zweckmäßig durch die Reduzierung der Rasterbreite. Da vorzugsweise die Rasterung parallel zum Rand im Wesentlichen unverändert bleibt, entsteht damit eine im Wesentlichen ellipsoide Gewölbestruktur. In der Hintereinanderschaltung mehrerer Schritte, kann zweckmäßig die Spannung der Zugelemente soweit reduziert werden, bis die Spannung eine Befestigung erlaubt.

Durch die Verwendung von Randelementen, insbesondere nach dem Prinzip der herkömmlichen Vakuum Isolierpaneelen (VIP) und ferner bevorzugt mit mikroporöser Feststofffüllung, kann zweckmäßig unter anderem bei der Montage mit vorgefertigten Formstücken gearbeitet werden. Diese erlauben es, mindestens ein Verbindungs- bzw. Zugelement zumindest teilweise zwischen den Berührungsflächen zu befestigen und für mindestens eine Einheit mit mindestens einem Verbindungselement und mindestens einem Strahlungsschild bzw. ein Zwischenelement aus Faser- Multilayerschicht als Montagerahmen zu dienen. Durch die Kombination mit der VIP-Technologie entsteht damit zwar eine Wärmebrücke, die jedoch im Bereich bisheriger hoch effizienter Isolierungen liegt.

Der Gasdruck in dem VIP-Element besitzt vorzugsweise bereits ein niedriges Niveau. Bevorzugt vorteilhaft ist somit keine weitere insbesondere hochdiffusionsdichte (z.B. metallische) Barriere zum Hochvakuum der fasergestützten Fläche, also dem Hohlraum der Flächenkonstruktion, vorgesehen. Die Folienhülle des Randelementes, insbesondere die Hülle dessen Hälften , dient bevorzugt als Abdichtung gegen die Atmosphäre.

Ferner kann die Flächenkoustruktion so gestaltet sein, um ein Gleiten mindestens eines Verbindungselementes bzw. der Fasern auf den Verbindungsstellen bzw. Berührungspunkten unter Last zu verhindern. Dies würde die zulässige Festigkeit der Verbindungselemente bzw. Fasern mindern und/oder den Wärmetransport steigern bzw. die Tragfähigkeit der Konstruktion gefährden.

Die vorliegende Erfindung umfasst ferner durch die folgenden zusätzlichen und/oder alternativen Aspekte:
1. Evakuierte Flächenkonstruktion zur Wärme- und Schallisolation (1) mit Abstandshaltung der Deckflächen (3), insbesondere durch hoch belastete bzw. hoch belastbare Zugelemente (2), gekennzeichnet durch umgeformte, gegossene oder anderweitig hergestellte, insbesondere gasdichte Deckflächen (3) die in sich so geometrisch gestaltet sind, dass sie die Kräfte, direkt ineinander greifend, in die Zugelemente einleiten können, durchlaufende Zugelemente abwechselnd von der einen zum gegenüberliegenden Wandelement wechseln und damit sowohl die Lasten des Luftdrucks als auch die Schublasten in den Deckflächen (3) abtragen können, die Zugfasern (2) hoch belastet bzw. belastbar und damit insbesondere sehr dünn gegenüber der abgelasteten Deckflächenrasterfläche ausgeführt werden können, wodurch sich insbesondere ein sehr hoher Wärmedurchlasswiderstand in den Fasern ausbildet, der vorzugsweise umgehrt proportional zum Deckflächenabstand bereits ab minimalen Deckflächenabständen die Feststoffwärmeleitung zur untergeordneten Größe macht.
2. Evakuierte Flächenkonstruktion zur Wärme- und Schallisolation nach Aspekt 1, dadurch gekennzeichnet, dass das aus einer beliebigen Anzahl von reflektierenden Schichten aufgebaute Strahlungsschild (4) der Fixierung der Zugelementen (Fasern, Garn) während der Montage dient, und nach der Montage sich dieses Strahlungsschild jeweils an den Stellen der Fasern abstützt welche ein annähernd gleiches Temperaturniveau besitzen.
3. Evakuierte Flächenkonstruktion zur Wärme- und Schallisolation nach Aspekt 1 oder 2,
   dadurch gekennzeichnet, dass die Zugelemente bei geeigneten Materialkennwerten beim Einbau geradlinig verlaufen können und erst durch das aufbringen der Lasten ihre verschränkte Zick-Zack-Form einnehmen.
4. Evakuierte Flächenkonstruktion zur Wänne- und Schallisolation nach einem der Aspekte 1-3, dadurch gekennzeichnet, dass die Form der Flächenkonstruktion nicht auf Plane Flächen begrenzt ist, sondern auch frei geformte Ausbildung der Deckflächen, zum Zweck der optimierten Nutzung von Einbauräumen, der freien designerischen Gestaltung und der Ausbildung optimaler Hohlkörper ermöglicht.
5. Evakuierte Flächenkonstruktion zur Wärme- und Schallisolation nach einem der Aspekte 1-4, dadurch gekennzeichnet, dass insbesondere durch die elastische Zugverbindung der Deckflächen und durch die diagonale Ausbildung der Zugelemente mit den sehr kleinen Querschnittsflächen der Zugelementen eine gute akustische und schwingungstechnische Trennung als Tiefpassfilter ermöglicht wird, deren Grenzfrequenz insbesondere bei Verwendung von Fasern oder Drähten mit niedrigem E-Modul/Zugfestigkeitsverhältnis und massiveren Deckfläche noch weiter gesenkt werden kann.
6. Evakuierte Flächenkonstruktion zur Wärme- und Schallisolation nach einem der Aspekte 1-5, dadurch gekennzeichnet, dass durch interne Ablastung aller angreifenden Kräfte in der Faserstruktur es möglich ist, einen lastfreien Randverbund mit entsprechend reduzierten Wandstärken und damit reduzierten Wärmebrücken zu gestalten.
7. Evakuierte Flächenkonstruktion zur Wärme- und Schallisolation nach einem der Aspekte 1-6, dadurch gekennzeichnet, dass dieses System sich hervorragend für eine Miniaturisierung eignet, das bis hin zu textilen Eigenschaften bzw. textilen Anwendungsfällen reicht.
8. Evakuierte Flächenkonstruktion zur Wärme- und Schallisolation nach einem der Aspekte 1-7, dadurch gekennzeichnet, dass die vorzugsweise mit optisch transparenten Deckflächen ausgerüstet Flächenkonstruktion auch für die Konstruktion von thermischen Solaranlagen und für architektonische Lichtelemente geeignet ist.
9. In einer weiteren Ausgestaltung umfasst die evakuierte Flächenkonstruktion zur Wänne- und Schallisolation, insbesondere nach einem der Aspekte 1-8, mindestens eine Abstandshaltung der Deckflächen durch vorzugsweise (ein) hoch belastete(s) Zugelement(e) und ferner mindestent eines, vorzugsweise mehrere der folgenden Merkmale:
   - insbesondere umgeformte, gegossene und/oder anderweitig hergestellte, insbesondere gasdichte, Deckflächen, die bevorzugt in sich so geometrisch gestaltet sind, dass sie die Kräfte, direkt ineinander greifend, größtenteils in Zugelement(e) einleiten können,
   - ihre insbesondere zumindest bereichsweise im Wesentlichen dreidimensionale gewölbeartige Struktur, die gleichzeitig bevorzugt zumindest teilweise die Aufgabe der Tragstruktur und/oder der hermetischen Trennung übernimmt, und bevorzugt geeignet sind, damit den Materialbedarf entscheidend reduzieren,
   - im Wesentlichen orthogonal oder winkelig zueinander angeordnete, also dreidimensional, durchlaufende Zugelemente abwechselnd von der einen zum gegenüberliegenden Wandelement wechseln und damit bevorzugt die Lasten des Luftdrucks und/oder Schublasten in den Deckflächen (3) abtragen können,
   - der mindestens eine Auflagerpunkt bzw. mehrere bzw. alle Auflagerpunkte des/der Zugelement(e) als vorzugsweise konkave Nut mit bevorzugt konvexer Krümmung im Wesentlichen quer zum Faserverlauf aufweisen, wobei die Nut bzw. Nuten des/der im Wesentlichen rechtwinklig verlaufende(n) Zugelement(e) zudem höhenversetzt angeordnet sind, insbesondere um negative Effekte auf die kreuzenden Zugelemente größtenteils auszuschalten und damit bevorzugt in der Gesamtheit der beschriebenen Nuteigenschaften die zulässigen Spannungen in den Zugelementen bevorzugt zu erhöhen und vorzugsweise eine Fixierung der Zugelemente in ihrer Lage zu erreichen ist,
   - das aus mindestens einer oder aus einer beliebigen Anzahl von bzw. aus mehreren reflektierenden Schichten aufgebaute mindestens eine Strahlungsschild (4) zumindest teilweise der Fixierung der Zugelemente (beispielsweise Fasern und/oder Garn umfassend) zumindest und/oder bevorzugt während der Montage dient, und nach der Montage die fixierende Funktion der Elemente getauscht wird und damit sich diese(s) Strahlungsschild(er) jeweils an den Stellen der Fasern bzw. der Zugelemente abstützt, welche ein annähernd gleiches Temperaturniveau besitzen.
10. Vorteilhaft umfasst die im Wesentlichen evakuierte Flächenkonstruktion zur Wärme- und Schallisolation (1), insbesondere nach einem der Aspekte 1 bis 9, zusätzlich eines oder mehrere der folgenden Merkmale:
   - der Randbereich zumindest in einem Teilbereich mit abnehmenden Stützabständen ausgeführt ist, bevorzugt um die hohe Spannung des/der Zugelement(e) zumindest schrittweise auf ein für die Befestigung akzeptables Niveau zu reduzieren, wobei die Abstimmung der Stützenabstände vorzugsweise bestimmt ist durch den jeweiligen Anteil der tangentialen Last der vom einzelnen Auflagerpunkt beispielsweise durch Klemmung und/oder Reibung aufgenommen werden kann,
   - insbesondere zur Lösung der Randproblematik ist bevorzugt vorgesehen, Formelemente im Wesentlichen nach dem Prinzip der Vakuum-Isolier-Paneelen (VIP), vorzugsweise mit mikroporösen, Füllstoffen einzusetzen, wobei die zur Vermeidung von Wärmebrücken verwendete Randkonstruktion zweckmäßig auch als Montagerahmen für ein insbesondere vorgefertigte Zwischenschicht aus Zugelement(en) und Strahlungsschild(ern) Verwendung finden kann,
   - durch das Prinzip der VIP, insbesondere im Randbereich, kann bevorzugt auf eine im Wesentlichen hochdichte Absperrung verzichtet werden, da das VIP-Element bevorzugt als doppelte Barriere bereits eine ausreichende Abschottung darstellt.
11. Flächenkonstruktion (1) zur Wärme- und/oder Schallisolation mittels Vakuum, insbesondere nach einem der vorherigen Aspekte, die zwei zumindest teilweise gewölbte Wandelemente (3) und mindestens ein Verbindungselement (2) aufweist, wobei die Wandelemente im Wesentlichen parallel zueinander angeordnet sind und wobei das Verbindungselement mit den Wandelementen verbunden ist und die Wandelemente (3) unter Aufnahme von Zugkräften gegeneinander abstützt, wobei vorzugsweise mindestens ein Strahlungsschild (4) vorgesehen ist, dass sich zwischen den Wandelementen (3) erstreckt.
12. Flächenkonstruktion (1) nach einem der vorherigen Aspekte, wobei das mindestens eine Verbindungselement (2) ein Zugelement ist, dass die gegenüberliegenden Wandelemente (3) so miteinander verbindet, dass das Verbindungselement (2) im Wesentlichen auf Zug beansprucht ist.
13. Flächenkonstruktion (1) nach einem der vorherigen Aspekte, wobei sich das Verbindungselement (2) zumindest teilweise geneigt zu den Wandelementen (3) erstreckt.
14. Flächenkonstruktion (1) nach einem der vorherigen Aspekte, wobei sich mindestens ein Verbindungselement (2) mehrfach abwechselnd vom einen zum anderen Wandelement (3) erstreckt.
15. Flächenkonstruktion (1) nach einem der vorherigen Aspekte, wobei mindestens ein Verbindungselement (2) faden- oder schnurartig ausgebildet ist und vorzugsweise Fasern, Garn und/oder Drähte aufweist.
16. Flächenkonstruktion (1) nach einem der vorherigen Aspekte, wobei die Flächenkonstruktion (1) mehrere Verbindungselemente (2) aufweist.
17. Flächenkonstruktion (1) nach einem der vorherigen Aspekte, wobei Abschnitte des Verbindungselements und/oder die Verbindungselemente (2) im Wesentlichen orthogonal zueinander verlaufen.
18. Flächenkonstmktion (1) nach einem der vorherigen Aspekte, wobei sich das **bzw.** die Verbindungselement(e) im Wesentlichen gleichmäßig entlang der Wandelemente zwischen diesen erstrecken.
19. Flächenkonstruktion (1) nach einem der vorherigen Aspekte, wobei das/die Verbindungselement(e) den Großteil der, vorzugsweise im Wesentlichen sämtliche zwischen den Wandelementen wirkende Lasten aufnehmen.
20. Flächenkonstruktion (1) nach einem der vorherigen Aspekte, wobei die Wandelemente (3) mehrere, vorzugsweise regelmäßige, Wölbungen, insbesondere kalottenförmige Wölbungen, aufweisen.
21. Flächenkonstruktion (1) nach einem der vorherigen Aspekte, wobei die Wandelemente gasdicht ausgebildet sind.
22. Flächenkonstruktion (1) nach einem der vorherigen Aspekte, wobei die Flächenkonstruktion (1) zumindest bereichsweise eine, vorzugsweise zumindest Infrarotstrahlen reflektierende, Beschichtung aufweist.
23. Flächenkonstruktion (1) nach einem der vorherigen Aspekte, wobei die Wandelemente (3) zumindest teilweise transparent sind.
24. Flächenkonstruktion (1) nach einem der vorherigen Aspekte, wobei die Wandelemente (3) zumindest teilweise umgeformte oder gegossene Wandelemente (3) sind.
25. Flächenkonstruktion (1) nach einem der vorherigen Aspekte, wobei mindestens ein Strahlungsschild (4) mehrere reflektierende Schichten aufweist.
27. Flächenkonstruktion (1) nach einem der vorherigen Aspekte, wobei das Strahlungsschild von dem Verbindungselement durchdrungen wird und/oder durch dieses gestützt wird.
28. Flächenkonstruktion (1) nach einem der vorherigen Aspekte, wobei das Strahlungsschild (4) an Stellen im Wesentlichen gleichen Temperatuniveaus des/der Verbindungselements(e) (2) mit diesem(n) in Kontakt steht.
29. Flächenkonstruktion (1) nach einem der vorherigen Aspekte, wobei mindestens ein Strahlungsschild (4) zwischen den Wandelementen zumindest abschnittweise entlang Bereichen annähernd gleichen Temperaturniveaus verläuft.
30. Flächenkonstruktion (1) nach einem der vorherigen Aspekte, wobei das Strahlungsschild (4) folienartig und/oder als Fasermatrix ausgebildet ist.
31. Flächenkonstruktion (1) nach einem der vorherigen Aspekte, wobei ein Strahlungsschild (4) ein Verbindungselement (2) vor und/oder bei der Montage zumindest teilweise fixiert.
32. Flächenkonstruktion (1) nach einem der vorherigen Aspekte, wobei ein Verbindungselement (2) ein Strahlungsschild (4) im montierten und/oder vakuumierten Zustand zumindest teilweise fixiert.
33. Flächenkonstruktion (1) nach einem der vorherigen Aspekte, wobei die Flächenkonstruktion (1) zumindest teilweise Materialien mit textilen Eigenschaften aufweist und/oder zur textilen Anwendung geeignet ist.
34. Flächenkonstruktion (1) nach einem der vorherigen Aspekte, wobei die Flächenkonstruktion (1) für thennische Solaranlagen und/oder für architektonisclle Lichtelemente ausgebildet und/oder geeignet ist.
35. Flächenkonstruktion (1) nach einem der vorherigen Aspekte, wobei die Flächenkonstruktion (1) zumindest teilweise eine Sandwich-Konstruktion und/oder eine räumliche Fachwerkstruktur ausbildet.
36. Flächenkonstruktion (1) nach einem der vorherigen Aspekte, wobei ein Verbindungselement (2) mit den Wandelemente (3) an je mindestens einer Verbindungsstelle verbunden ist, wobei sich diese bevorzugt in einem Auflagerpunkt der Wandelemente befindet.
37. Flächenkonstruktion (1) nach einem der vorherigen Aspekte, wobei ein Verbindungselement (2) fest mit einem Wandelement verbunden ist.
38. Flächenkonstruktion (1) nach einem der vorherigen Aspekte, wobei mehrere Verbindungselemente im Bereich einer Verbindungsstelle mit einem Wandelement (3) verbunden sind, wobei die Verbindungselemente vorzugsweise nicht miteinander in Kontakt stehen.
39. Flächenkonstruktion (1) nach einem der vorherigen Aspekte, wobei mehrere mit einem Wandelement (3) verbundene Verbindungselemente (2), die insbesondere bevorzugt im Bereich einer Verbindungsstelle eines Wandelementes (3) mit diesem verbunden sind, sich von der Verbindungsstelle in unterschiedliche Richtungen erstrecken.
40. Flächenkonstruktion (1) nach einem der vorherigen Aspekte, wobei Verbindungselemente, die im Bereich einer Verbindungsstelle mit dem einen Wandelement verbunden sind, nicht im Bereich einer Verbindungsstelle mit dem anderen Wandelement verbunden sind.
41. Flächenkonstruktion (1) nach einem der vorherigen Aspekte, wobei die Flächenkonstruktion (1) im Randbereich einen Randverbund und/oder Rahmen aufweist, wobei die Wandelemente und/oder das Strahlungsschild vorzugsweise in bzw. an dem Randverbund oder Rahmen zumindest teilweise gequetscht, verschweißt und/oder geklebt sind.
42. Flächenkonstruktion (1) nach einem der vorherigen Aspekte, wobei die Flächenkonstruktion (1) im Randbereich einen Randverbund und/oder Rahmen aufweist, der zumindest teilweise ein Mittel zur Wärmetrennung, insbesondere mittels Füllstoffen aufweist.
43. Flächenkonstruktion (1) nach einem der vorherigen Aspekte, wobei die Flächenkonstruktion (1) im Randbereich einen Randverbund und/oder Rahmen aufweist, der zumindest teilweise in Verbindung mit einem Wandelement (3), einem Strahlungsschild (4) und/oder einem Verbindungselement (2) steht und vorzugsweise als Montagehilfe für ein Strahlungsschild (4) und/oder ein Verbindungselement (2) dient.
44. Flächcnkonstruktion (1) nach einem der vorherigen Aspekte, wobei die Wandelemente derart ausgebildet und/oder angeordnet sind, dass die Wölbungen zueinander versetzt sind.
45. Flächenkonstruktion (1) nach einem der vorherigen Aspekte, wobei die Wölbungen eine offene (konkave) und eine geschlossene (konvexe) Seite aufweisen und die konkaven Seiten und die konvexen Seiten der Wölbungen jeweils auf einer Seite der Wandelemente ausgebildet sind.
46. Flächenkonstruktion (1) nach einem der vorherigen Aspekte, wobei die Wandelemente ineinandergreifend angeordnet sind.
47. Verfahren zur Herstellung einer Flächenkonstruktion (1), insbesondere nach einem der vorherigen Aspekte, mit den folgenden Schritten:
   Bereitstellen von Wandelementen (3);
   Bereitstellen von mindestens einem Strahlungsschild (4) sowie von mindestens einem Verbindungselement (2); und
   Anordnen von mindestens einem Strahlungsschild (4) sowie von mindestens einem Verbindungselement (2), insbesondere zwischen den Wandelementen (3).
48. Verfahren nach Aspekt 47, wobei ein Verbindungselement (2) mindestens ein Strahlungsschild (4) durchdringt.
49. Verfahren nach einem der Aspekte 47 oder 48, wobei mindestens ein Verbindungselement (2) sich vor und/oder am Anfang der Montage im Wesentlichen parallel zu mindestens einem der Wandelemente (3) und/oder einem Strahlungsschild (4) erstreckt.
50. Verfahren nach einem der Aspekte 47 bis 49, ferner mit dem folgenden Schritt:
   Zumindest teilweises Evakuieren bzw. Vakuumieren des zwischen den Wandelementen befindlichen Raumes.
51. Verfahren nach einem der nach einem der Aspekte 47 bis 50, ferner mit dem folgenden Schritt:
   überführen der Position mindestens eines Verbindungselements von einer im Wesentlichen parallel zu mindestens einem der Wandelemente und/oder mindestens einem Strahlungsschild ausgerichteten Position zumindest abschnittsweise in eine im Wesentlichen nicht parallel zu mindestens einem der Wandelemente und/oder dem Strahlungsschild bzw. geneigt erstreckenden Position.
52. Verfahren nach einem der Aspekte 41 bis 51, wobei das Bereitstellen von mindestens einem Strahlungsschild (4) sowie von mindestens einem Verbindungselement (2) eine Vonnontage von Strahlungsschild (4) und Verbindungselement (2) zu einer Einheit umfasst.
53. Verfahren nach einem der Aspekte 47 bis 52, wobei das Anordnen von mindestens einem Strahlungsschild (4) sowie von mindestens einem Verbindungselement (2) zwischen den gegenüberliegenden Wandelementen (3) durch Anordnen der Einheit aus Strahlungsschild (4) und Verbindungselement (2) geschieht.
54. Verfahren nach einem der Aspekte 47 bis 53, ferner mit dem folgenden Schritt:
   zumindest abschnittsweises Anordnen eines Rahmen, vorzugsweise mit Füllstoffen,
   bevorzugt in den Randbereichen der Flächenkonstruktion (1).
55. Verfahren nach einem der nach einem der Aspekte 47 bis 54, ferner mit dem folgenden Schritt:
   Zusammenfügen von zwei Füllstoffen umfassende Hälften , die bevorzugt mindestens ein Verbindungselement (2) zumindest teilweise fixieren.
56. Verfahren nach einem der nach einem der Aspekte 47 bis 55, ferner mit dem folgenden Schritt:
   zumindest teilweise Ausbilden eines Randverbundes der Flächenkonstruktion (1),
   vorzugsweise durch Quetschen, Schweißen und/oder Kleben.

Nachfolgend werden die Merkmale und Vorteile der vorliegenden Erfindung anhand bevorzugter Ausführungsformen unter Bezugnahme auf die Figuren näher erläutert. Dabei zeigen:
Figur 1 eine Querschnittsansicht einer Flächenkonstruktion gemäß der vorliegenden
   Erfindung ohne Strahlungsschild;
Figur 2 eine Querschnittsansicht einer Flächenkonstruktion im montierten Zustand mit
   drei Strahlungsschildem;
Figur 3 drei-dimensionale Ansichten von Teilen einer erfindungsgemäßen
   Flächenkonstruktion;
Figur 4 eine schematische Darstellung auftretender Kräfte;
Figur 5 einen Randbereich einer erfindungsgemäßen Flächenkonstruktion im
   Querschnitt, wobei Figur 5a Elemente des Randbereich darstellt und Fig. 5b
   diese in eine Flächenkonstruktion eingebettet zeigt;
Figur 6 Schnittdarstellungen einer als Auflagerstelle ausgeführten Verbindungsstelle,
   wobei Fig. 6a und Fig. 6b die gleiche Auflagerstelle, jedoch im Winkel von
   90° zueinander versetzter zeigt; und
Figur 7 eine drei-dimensionale Ansicht des/der Verbindungselement(e) im montierten
   Zustand, wobei keine anderen Komponenten der Flächenkonstruktion
   dargestellt sind.

Die Flächenkonstruktion bzw. das Bauelement oder die Vakuumisolierung 1 umfasst bzw. besteht aus zwei gasdichten Wand- bzw. Deckflächen 3, einer Matrix aus Zugelementen, z.B. hochfesten Fasern 2, und einer oder mehreren, insbesondere als Montagehilfe dienenden, vorzugsweise IR-reflektierenden, Folie 4. Die Kombination des Folien-Faser-Verbundes wird bei der Montage zwischen die speziell gestalteten dünnwandigen Deckflächen gefügt und evakuiert. Dabei übernehmen die dann auf Zug belasteten Fasern die Stützfunktion zum Abtragen der auftretenden barometrischen Lasten und können Schubkräfte zwischen den Deckschichten aufnehmen.

Durch den inneren Aufbau ergibt sich ein relativ weicher Wandaufbau der in der Steifigkeit etwa 0,1 Promille einer soliden artgleichen Wand beträgt. Dadurch wird die Flächenkonstmktion bzw. die Vakuumpaneele vorzugsweise zum akustischen Tiefpaßfilter deren Grenzfrequenz durch das Flächengewicht der Deckschichten beeinflussbar ist.

Da der Flächenaufbau homogen ist, und die Kräfte weitgehend innerhalb der Struktur abgetragen werden, ist es möglich Randverbünde speziell nach dem Einsatzgebiet zu wählen. Es können auf der einen Seite sowohl einfach ausgebildete z.B. gequetscht, geklebt und/oder verschweißte Verbünde eingesetzt werden, aber auch hochwertige mit sehr guter Wärmetrennung. Die ersteren sind eher für kleinere Teznperaturgefälle oder mehrlagige Wandaufbauten, die zweite Gruppe ist dem Einsatz in Spezialgebieten wie z.B. der Tieftemperaturapplikationen, Forschung und Raumfahrt vorbehalten. Da die vorliegende Erfindung nicht nur auf plane Flächen begrenzt ist, bietet sich diese Technologie vor allem auch an für die Isolierung von Behältern und Rohrleitungen zur Lagerung und Transport von verflüssigten Gasen.

Figur 1 zeigt die erfindungsgemäße Flächenkonstruktion 1 in einer zwei-dimensionalen Schnittdarstellung. Die Wandelemente 3 sind einander gegenüberliegend und parallel zueinander angeordnet. Jedes der Wandelemente 3 besteht aus mehreren Wölbungen bzw. gewölbten Abschnitten, die in der dargestellten Ausführungsform jeweils die gleiche gewölbte Kontur aufweisen. Die Wölbungen eines Wandelementes sind dabei jeweils gleich orientiert. So weisen beispielsweise die Wölbungen des unteren Wandelementes 3a der in der Figur 1 dargestellten Flächenkonstruktion 1 in der Draufsicht eine konkave Kontur auf. Die Randbereiche der einzelnen Wölbungen des unteren Wandelementes 3a stehen vertikal vor bzw. ragen empor. Die einzelnen Wölbungen des unteren Wandelementes 3a sind in ihren Randbereichen miteinander verbunden.

Das obere Wandelement 3b entspricht im Wesentlichen dem unteren Wandelement 3a. Die Wandelemente 3, hier also Wandelement 3a und 3b, sind mit den konkaven Seiten der Wölbungen zueinander weisend angeordnet, also gegeneinander um 180° zur Horizontalen gedreht angeordnet. Zudem sind die Wölbungen der beiden Wandelemente 3 versetzt zueinander angeordnet bzw. sind die Wandelemente 3 um etwa eine halbe Wölbung versetzt zueinander angeordnet. Die Wölbungen des unteren und oberen Wandelementes 3a, 3b weisen somit mit ihren offenen Seiten in einer konkav-konkaven Ausrichtung zueinander hin. Dabei ragen die Enden benachbarter Wölbungen des oberen Wandelements 3b in die konkavseitigen Öffnungen bzw. Vertiefungen der Wölbungen des unteren Wandelements 3a hinein und umgekehrt. Die Wandelemente 3 greifen also ineinander. Insbesondere sind die Wandelemente 3 bzw. die Wölbungen oder Vertiefungen derart ausgebildet, dass ein Ineinandergreifen gegenüberliegender Wandelemente 3 ermöglicht wird, wobei die Wandelemente 3 derart ausgebildet und/oder zueinander angeordnet sind, dass die zum jeweilig gegenüberliegenden Wandelement weisenden äußeren Flächen bzw. Bereiche des Wandelements in Richtung des gegenüberliegenden Wandelements hinter den entsprechenden äußeren Flächen bzw. Bereichen des gegenüberliegenden Wandelementes liegen. Die Wandelemente greifen also ineinander.

Dies kann auch anhand der bspw. in Fig. 1 und 2 dargestellten Ebene 6 beschrieben werden. Die einander zugewandten Seiten der unteren und oberen Wandelemente 3a, 3b durchdringen beide eine bzw. dieselbe imaginäre Ebene 6. Dabei sind die Wandelemente 3 bzw. deren Wölbungen versetzt zueinander angeordnet.

In der Figur 1 erstreckt sich ein Verbindungselement 2 abwechselnd zwischen dem unteren und oberen Wandelement 3a, 3b. Das Verbindungselement 2 ist dabei an Auflager- oder Befestigungspunkten 6 mit dem unteren und oberen Wandelemente 3a, 3b verbunden bzw. steht dort in Kontakt. Die Befestigungs- oder Auflagerpunkte 6 sind vorzugsweise im Bereich der Stellen der Wandelemente 3 angeordnet, die bei ineinandergreifender Anordnung der Wandelemente 3 dem gegenüberliegenden Wandelement am nächsten liegen bzw. in dieses bzw. die konkave Seite der Wölbungen eingreifen bzw. hineinragen. Bei der dargestellten, vorzugsweise kalottenförmigen, Ausbildung sind die untersten Randbereiche benachbarter Wölbungen unmittelbar benachbart bzw. grenzen aneinander an bzw. gehen dort ineinander über. Sie bilden jeweils in dem in das gegenüberliegende Wandelement eingreifenden Abschnitt einen gemeinsamen Bereich aus, in dem ein Auflager 6 angeordnet ist, auf dem das Verbindungselement 2 aufliegt bzw. an dem es angreift. Die Auflagerpunkte 6 des oberen Wandelements 3b liegen also in den Wölbungen des unteren Wandelements 3a und umgekehrt.

Die Auflagerpunkte 6 eines jeden Wandelementes 3 sind somit an Stellen angeordnet, die von der Außenfläche des jeweiligen Wandelements am weitesten entfernt sind. Die geschlossenen Seiten der Wölbungen bzw. deren Kuppeln sind dabei der Außenseite eines jeden Wandelements zugewandt bzw. bilden diese, wohingegen die offenen oder konkaven Seiten der Wandelemente 3 die dem jeweils anderen Wandelement zugewandte Unter- bzw. Innenseite bilden. Die Länge des Verbindungselementes 2 bzw. der einzelnen Abschnitte zwischen zwei Befestigungs- oder Auflagerpunkten 6 des Verbindungselementes 2 ist dabei so gewählt, dass die Wandelemente 3 ineinandergreifen. Durch die beschriebene Ausgestaltung kann insbesondere eine direkte Wärmeleitung zwischen aneinander anliegenden Bereichen der Wandelemente 3 sowie negative Auswirkungen auf die mechanischen Eigenschaften vermieden werden.

Das Verbindungselement 2 verläuft zwischen zwei Auflagern 6 jeweils geradlinig. Insgesamt erstreckt sich das Verbindungselement 2 somit in etwa zick-zack-förmig jeweils abwechselnd vom Auflager 6 einer Wölbung bzw. eines Wandelementes 3 zu einem anderen Auflager 6 einer gegenüberliegenden Wölbung bzw. des gegenüberliegenden Wandelements 3. Die Auflager 6 eines Wandelements liegen jeweils auf der dem jeweiligen Wandelement abgewandten Seite der Ebene 7. Die Verbindungselemente 2 verlaufen von einem Auflager 6 auf einer Seite der Ebene 7 zu einem anderen Auflager 6 auf der anderen Seite der Ebene 7.

Die Verbindungselemente 2 werden aufgrund der besonderen Anordnung und Ausbildung der gegenüberliegenden Wandelemente 3 auf Zug beansprucht, dies insbesondere dann, wenn zwischen den gegenüberliegenden Wandelementen 3 ein evakuierter bzw. vakuumierter Raum bzw Hohlraum vorliegt bzw. ein geringerer Druck als an den Außenseiten der Wandelemente 3, wo vorzugsweise Atmosphären- bzw. Umgebungsdruck herrscht. Aus Figur 1 ist ferner ersichtlich, dass das Verbindungselement 2 auch an anderen Stellen der Wölbungen angeordnet werden kann, solange das Verbindungselement 2 weiterhin auf Zug beansprucht ist.

Figur 2 zeigt die Flächenkonstruktion 1 gemäß Figur 1, die jedoch zusätzlich drei Strahlungsschilder 4 zwischen den Wandelementen 3 sowie eine bevorzugte Infrarot-Beschichtung 5 auf der Außenseite des unteren und oberen Wandelementes 3a, 3b umfasst.

Mittels einer im Querschnitt wellenförmig ausgebildete Kontur der Strahlungsschilder 4 sowie einer geeigneten Befestigung der Strahlungsschilder 4 an den Verbindungselementen 2 sind die Strahlungsschilder 4 zwischen den oberen und unteren Wandelementen 3 angeordnet, vorzugsweise derart, dass sie sich nicht gegenseitig berühren. Ferner stehen die Strahlungsschilder 4 vorzugsweise auch nicht in direktem Kontakt mit dem oberen und/oder unteren Wandelement 3. Die Strahlungsschilder 4 werden vorzugsweise nur durch die Verbindungselemente, ggf. unter Zuhilfenahme randseitiger Abstützung durch den Randbereich und/oder ein Rahmenelement, abgestützt.

Die Strahlungsschilder 4 sind zudem vorzugsweise durchgängige bzw. kontinuierliche folienartige Elemente und bilden im Zusammenspiel mit den Wandelementen 3 mehrere Kammern aus, die im Wesentlichen parallel zu den Wandelementen 3 und zwischen den Strahlungsschildern 4 und den Wandelementen 3 und/oder anderen Strahlungsschildern 4 verlaufen. Die folienartigen Strahlungsschilder 4 sind vorzugsweise formstabil bzw. selbsttragende. Sie weisen im Schnitt vorzugsweise eine im Wesentlichen wellenartige Kontur auf, die vorzugsweise dem zwischen den Wandelementen durch die Kontur der Wölbungen der Wandelemente 3 gebildeten ausgebildeten Zwischenraums folgt. Die Strahlungsschilder 4 sind an mehreren Stellen von dem bzw. den Verbindungselement(en) 2 durchdrungen. An den Stellen, an denen das Verbindungselement 2 die Strahlungsschilder 4 durchdringt, sind die Strahlungsschilder vorzugsweise an dem Verbindungselement 2 fixiert und durch dieses positioniert.

Das Verbindungselement 2 hat also insbesondere mindestens zwei Funktionen: Einerseits verbindet das Verbindungselement 2 das obere Wandelement 3b mit dem unteren Wandelement 3a und nimmt die an diesen Wandelementen 3 angreifenden Kräfte als Zugkräfte auf. Andererseits dient das Verbindungselement 2 als Stütz- und/oder Positionierungsmittel für die Strahlungsschilder 4.

Aufgrund der Tatsache, dass das Strahlungsschild 4 im Wesentlichen von der Übertragung von an den Wandelementen 3 angreifenden äußeren Kräften abgekoppelt ist, kann die Form, Beschaffenheit und/oder Position der Strahlungsschilder 4 innerhalb des Vakuums dahingehend optimiert werden, dass die Flächenkonstruktion 1 hinsichtlich der Wärme- und/oder Schallisolation bzw. -reduzierung gute bzw. verbesserte Eigenschaften aufweist.

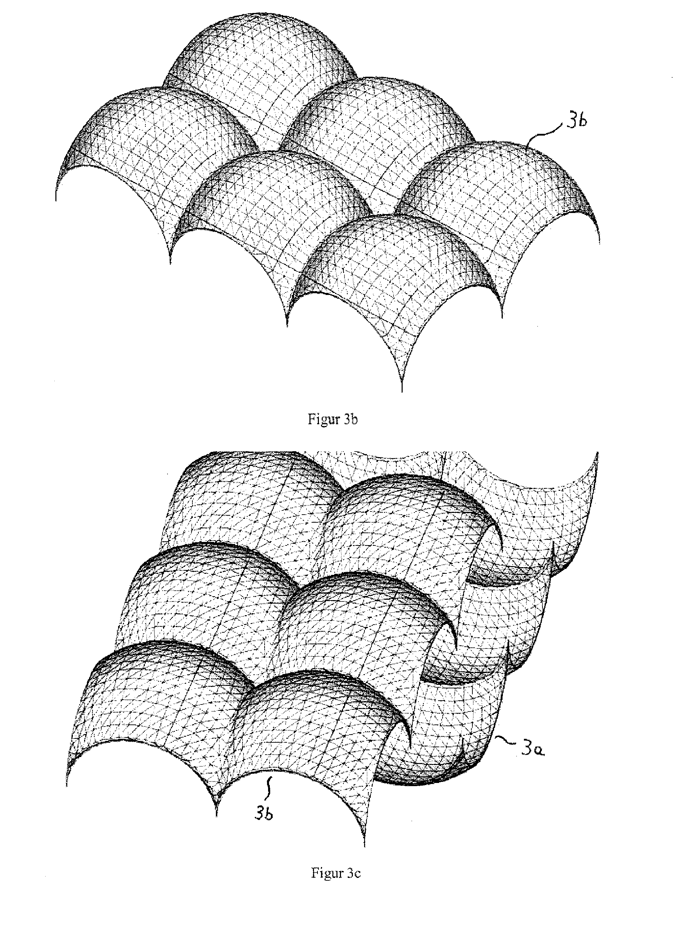

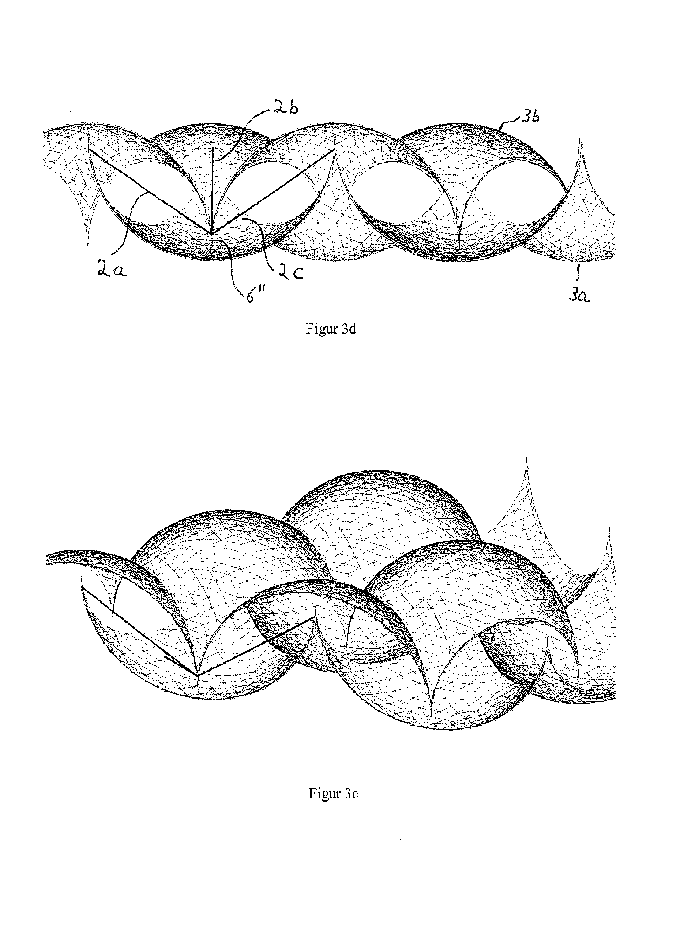

In Figur 3 ist eine Ausführung in einer drei-dimensionalen Ansicht dargestellt. Aus Gründen der Übersicht sind in den Figuren 3a bis 3e weitere Komponenten wie beispielsweise die Strahlungsschilder 4 nicht dargestellt. Die einzelnen Wölbungen des oberen und unteren Wandelements 3a, 3b teilen sich in diesem Ausführungsbeispiel mit den jeweils angrenzenden Wölbungen jeweils vier gekrümmte Begrenzungslinien, an denen benachbarte Wölbungen miteinander verbunden sind bzw. ineinander übergehen. In den untersten Randbereichen der Wölbungen bzw. der Wandelemente 3 laufen jeweils vier Begrenzungslinien von hier vier benachbarten Wölbungen zusammen. In diesem Bereich ist eine Verbindungs- bzw. Auflagerstelle 6 ausgebildet. In der Verbindungsstelle 6 ist das Verbindungselement 2 bzw. sind die Verbindungselemente 2 jeweils mit dem Wandelement 3 verbunden. Eine Wölbung kann aber auch eine andere Anzahl an Begrenzungslinien und eine andere Anzahl an angrenzenden Wölbungen aufweisen. So kann eine Wölbung beispielsweise auch sechs Begrenzungslinien und sechs angrenzende Wölbungen aufweisen.

Figur 3a zeigt das untere Wandelement 3a, das obere Wandelement 3b sowie Verbindungselemente 2 in einer perspektivischen Schrägansicht, wobei die Schnittflächen um etwa 45° gegenüber der Ansicht gemäß Fig. 3b gedreht sind. Wie aus Figur 3a ersichtlich, können in einer Verbindungsstelle 6 mehrere Verbindungselemente 2 aus verschiedenen Richtungen zusammenlaufen. Diese auf Zug beanspruchten Verbindungselemente 2 mit unterschiedlicher Orientierung stellen sicher, dass im evakuierten und/oder vakuumierten Zustand die außen an den Wandelementen 3 angreifenden Kräfte richtungsunabhängig in die entstehende Struktur von im Wesentlichen auf Zug beanspruchten Verbindungselementen 2 aufgenommen werden. An den Auflagerpunkten 6" grenzen vorzugsweise jeweils vier Verbindungselementabschnitte 2a, 2b, 2c und 2d an. Die Verbindungselementabschnitte 2a, 2b, 2c und 2d bezeichnen vorzugsweise jeweils den Abschnitt eines oder mehrerer Verbindungselemente 2 zwischen zwei benachbarten Verbindungsstellen, an denen sie jeweils befestigt sind oder an dem Wandelement anliegen. Die Verbindungselementabschnitte 2a, 2b, 2c und 2d verlaufen hier beispielsweise bzw. vorzugsweise von einem Auflagerpunkt 6" des oberen Wandelements 3b ausgehend untereinander winkelig in verschiedene Richtungen divergierend zu den benachbarten Auflagerpunkten 6' des unteren Wandelementes 3a. Exemplarisch ist in der Figur 3a die Verbindung eines Auflagers 6" des oberen Wandelementes 3b zu einem benachbarten Auflager 6' des unteren Wandelementes 3a durch den Verbindungselementabschnitt 2d vollständig gezeigt.

In Figur 3b ist ein oberes Wandelement 3b einzeln in einer weiteren perspektivischen Ansicht gezeigt. Figur 3c offenbart die Wandelemente 3a und 3b ohne weitere Komponenten.

Figur 3d zeigt den schematischen Aufbau in einer weiteren perspektivischen Seitenschnittansicht. Die Flächenkonstruktion 1 ist hierzu entlang einer Diagonalen der hier vorzugsweise in der Draufsicht etwa quadratisch ausgebildeten bzw. begrenzten Wölbungen geschnitten. Beispielhaft sind in dieser Figur 3d Verbindungselementabschnitte 2a, 2b und 2c eingezeichnet. Figur 3e zeigt eine weitere perspektivische Schnittansicht.

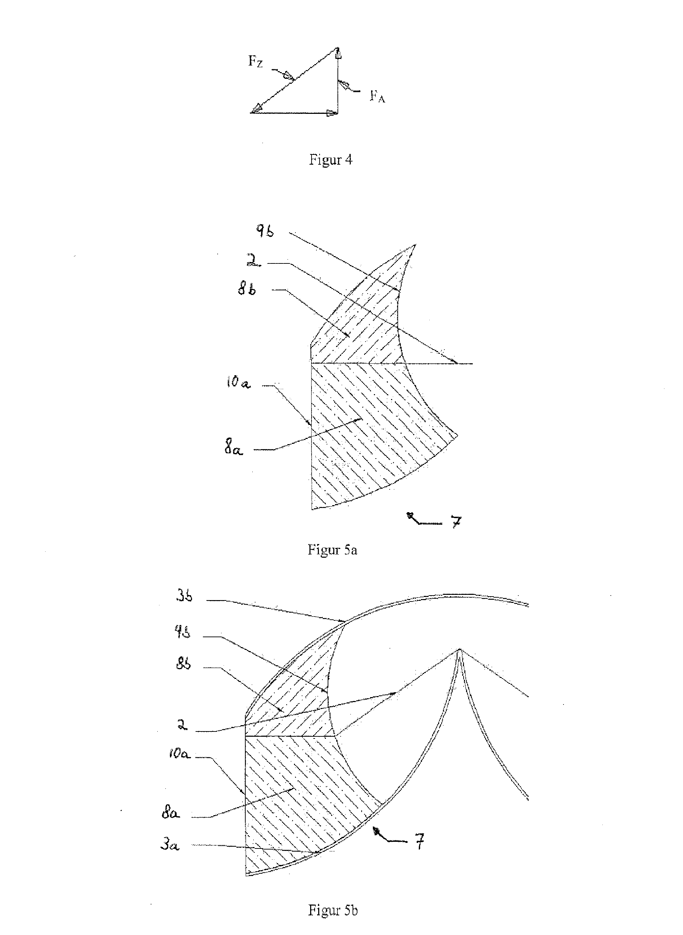

Figur 4 zeigt ein bevorzugtes, durch die erfindungsgemäße Flächekonstrulction erreichte Kräftegleichgewicht. Die im wesentlichen senkrecht in Richtung von außen auf die Wandelemente wirkenden Kräfte, insbesondere aus atmosphärischer Last, werden als Druckkräfte über die Wölbungs- bzw. Kuppelstruktur in die Auflagerpunkte 6 geleitet von wo sie als Zugkraft in die Verbindungselemente übertragen werden. Diese greifen am gegenüberliegenden Wandelement an, von dem aus entsprechende Zugkräfte in das Verbindungselement eingeleitet werden. Es zeigen F_{z} die Zuglast aus einer Teilfläche und F_{A} die atmosphärische Last auf einer Teilfläche.

Figur 5 zeigt schematisch einen Randbereich einer erfindungsgemäßen Flächenkonstruktion 1 in einem Schnitt quer zum Randverlauf der Flächenkonstruktion 1. In Figur 5a ist ein Rahmen bzw. Randverbund 7 in einer zweiteiligen Ausführung ohne anliegende Deckflächen bzw. Wandelemente 3a, 3b dargestellt. Die Figur 5b zeigt die Flächenkonstruktion 1 mit Rahmen bzw. Randverbund 7 sowie mit Wandelementen 3a, 3b im montierten Zustand. Insbesondere zur besseren Übersicht sind weitere Bauteile wie beispielsweise das Strahlungsschild 4, nicht dargestellt.

Der Rahmen bzw. Randverbund 7 umfasst vorzugsweise eine erste Hälfte bzw. Abschnitt 8a und eine zweite Hälfte bzw. Abschnitt 8b, die Füllstoffe in ihrem Inneren aufweisen. Zwischen den Hälften 8a, 8b verläuft/verlaufen (ein) Verbindungselement(e) 2, das in dem dargestellten Beispiel von den beiden Hälften 8a, 8b gehalten ist. Alternativ oder zusätzlich könnten noch andere Komponenten der Flächenkonstruktion 1 zwischen den beiden Hälften 8a, 8b angeordnet sein und/oder an den beiden Hälften 8a, 8b befestigt sein. Vorzugsweise ist ferner das bzw. die Verbindungselement(e) 2 nur teilweise durch die Hälften 8a, 8b gehalten oder durch diese geführt. Ferner bevorzugt sind zusätzliche Befestigungsmittel zur Befestigung der Komponenten außerhalb des Hohlraums der Flächenkonstruktion 1 vorgesehen. Ferner ist beispielsweise das mindestens eine Strahlungsschild 4 nicht direkt mit dem Rahmen bzw. Randverbund 7 verbunden, sondern zumindest teilweise lediglich über mindestens ein Verbindungselement 2.

Die Wände der Hälften bzw. Abschnitte 8a und 8b weisen hier in der Querschnittsansicht jeweils zwei bogenförmig und zwei im Wesentlichen gerade verlaufende Konturen auf. Die einander zugewandten ersten Wände der Hälften 8a, 8b verlaufen im Wesentlichen geradlinig. An ihnen ist das bzw. sind die Verbindungselement(e) 2 befestigt, das hier als Faser ausgebildet ist. Die den jeweils einander zugewandten ersten Wänden gegenüberliegend angeordneten zweiten Wände der Hälften 8a, 8b weisen jeweils eine bogenförmig Kontur auf. Die bogenförmige Kontur der zweiten Wände der Hälften 8a, 8b sind beispielsweise so geformt, dass sie der Kontur der Wandelemente 3a, 3b zumindest bereichsweise entspricht. An diesen zweiten Wänden liegen die Wandelemente 3a, 3b an und/oder sind an ihnen befestigt. Im dargestellten Beispiel entspricht die Kontur der zweiten Wände im Wesentlichen der Kontur der Wölbungen der Wandelemente 3a, 3b.

Zwischen den Wandelementen 3a und 3b ist ein Hohlraum ausgebildet, dessen eine seitliche Begrenzung hier nicht dargestellt ist. Die zum Rahmen bzw. zum Randverbund 7 hin ausgebildete Begrenzung des Hohlraums ist hier durch innenliegende bzw. dem Hohlraum zugewandte Wände der Hälften 8a, 8b, nachstehend Hohlraumbegrenzungswände 9a, 9b genannt, realisiert. Die Hohlrauinbegrenzungswände 9a, 9b stellen eine Trennwand bzw. eine Barriere zwischen dem Hohlraum und dem hier mit Füllstoff gefüllten Inneren der Hälften 8a, 8b dar. Sie weisen bevorzugt eine bogenförmige Kontur auf.

Gegenüber den innen angeordneten Hohlraumbegrenzungswänden 9a, 9b der Hälften 8a, 8b sind die seitlichen Außenwände 10a, 10b der Hälften 8a, 8b angeordnet. Die Außenwände 10a, 10b erstrecken sich im Querschnitt bevorzugt im Wesentlichen gerade. Dies vereinfacht beispielsweise die Integration weiterer Bauteile in die Flächenkonstruktion 1 oder die Integration der Flächenkonstruktion 1 in andere Bauteile.

Die Hälften 8a, 8b der Figuren 5a, 5b sind in diesem Beispiel nach dem Prinzip von Vakuum-Isolierpaneele aufgebaut. Der Druck innerhalb der Hälften 8a, 8b ist gegenüber der Atmosphäre verringert. Die Hohlraumbegrenzungswände 9a, 9b der Hälften 8a, 8b müssen daher vorteilhaft nicht den Kräften standhalten, die aus dem Differenzdruck zwischen Hohlraum und an den Wandelementen 3a, 3b anliegenden Atmosphärendruck resultieren, sondern können lediglich so bemessen sein, dass sie den Differenzdruck zwischen Hohlraum und Innendruck der Vakuum-Isolierpaneele geschuldeten Kräften standhalten. Beispielsweise kann daher eine Folie als Hohlraumbegrelizungswand eingesetzt werden. Die Hälften 8a, 8b weisen bevorzugt jeweils eine Hülle auf, die die erste und zweite Wand, die Hohlraumbegrenzungswand und die seitliche Außenwand, umfasst.

Alternativ zur Ausführung mit zwei Hälften 8a, 8b kann anstelle der Hälften 8a, 8b auch ein einteiliges Bauteil eingesetzt werden, welches im Aufbau den montierten Hälften 8a, 8b gleicht. In diesem Fall wären beispielsweise die mit dem einteiligen Bauteil befestigten Komponenten, wie Verbindungselemente 2 und/oder Strahlungsschilder 4, beispielsweise in einem vorgelagerten Prozessschritt mit dem Bauteil zumindest teilweise verbunden.

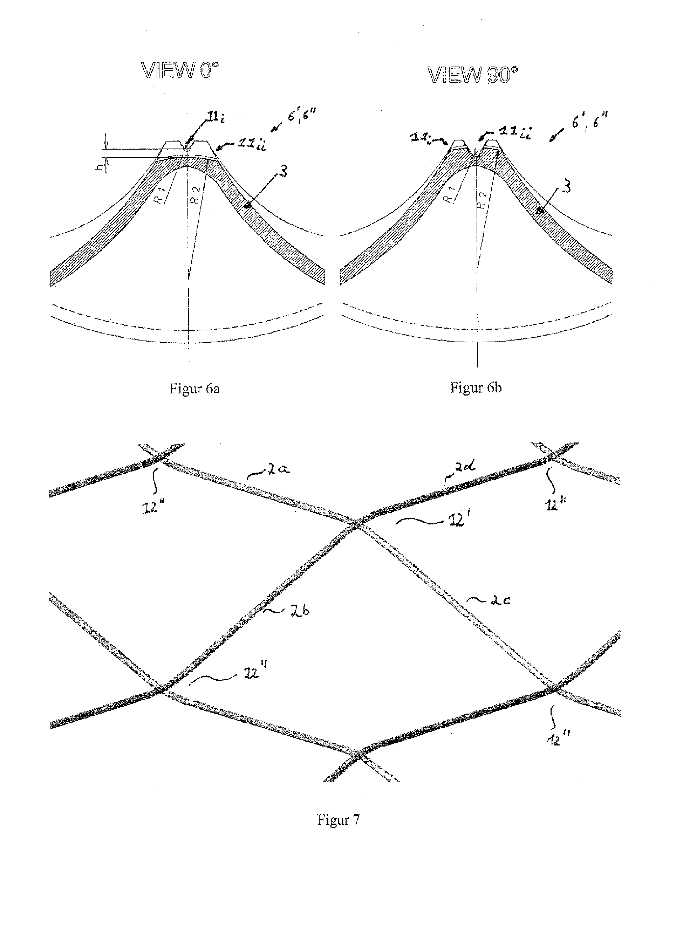

Figur 6a zeigt ein Beispiel eines Auflagerpunktes 6 in zwei verschiedenen Schnittansichten, die um 90° zueinander versetzt angeordnet sind. In Figur 6a ist eine Nut 11ᵢ gezeigt, die aus der Zeichenebene herausragend verläuft. Eine zweite Nut 11ᵢᵢ erstreckt sich hier in der Zeichenebene in einem Winkel von 90° zur Nut 11ᵢ. Der Nutboden der Nut 11ᵢ ist in einem Abstand h zum Nutboden der Nut 11ᵢᵢ angeordnet. Neben den hier gezeigten zwei Nuten können auch mehrere Nuten in verschiedenen Höhenlagen und Winkeln zueinander angeordnet sein, wobei das bzw. die in ihnen befindliche(n) Verbindungselement(en) bevorzugt sich nicht berühren, nicht aneinander reiben und/oder nicht aufeinander pressen.

Wie aus Figur 6a ersichtlich, weist die Nut 11ᵢ eine im Wesentlichen V-förmige Querschnittsform auf. Im Bereich des Nutbodens ist ein Radius R₁ quer zur Richtung des Nutverlaufs vorgesehen. Vom Nutboden zur Nutöffnung hin weitet sich die Nut 11ᵢ allmählich auf. Wie in Figur 6b dargestellt, ist die Nut 11ᵢ vorzugsweise ferner in Längsrichtung, also in Richtung längs des Nutverlaufs, mit einer Krümmung mit dem Radius R₂ versehen. Der Nutboden der Nut 11ᵢᵢ weist ebenfalls in Querrichtung zum Nutverlauf den Radius R₁ und in Längsrichtung zum Nutverlauf den Radius R₂ auf. Auch wenn beide Nuten 11ᵢ, 11ᵢᵢ in diesem Beispiel gleiche Radien besitzen, können jedoch auch unterschiedliche Radien vorgesehen sein. Die Querschnittsfläche des Wandelementes 3 ist in den Figuren 5 schraffiert dargestellt.

In Figur 7 ist bzw. sind ein oder mehrere Verbindungselement(e) 2 im montierten Zustand dargestellt. Alle anderen Komponenten der Flächenkonstruktion 1 sind in der Figur 7 nicht aufgeführt. Das bzw. die Verbindungselement(e) 2 bilden in dem dargestellten Beispiel eine Struktur, in der einzelne Verbindungselementabschnitte in verschiedene Punkte 12', 12" zusammenlaufen. Die Punkte 12', 12" sind in diesem Beispiel derart ausgeführt, dass sie mit Verbindungs- bzw. Auflagerstellen 6', 6" gemäß der Figur 6a, 6b in Anlage gebracht bzw. an diesen befestigt werden können. Feiner ist die Struktur für Auflagerstellen 6', 6" nach Figur 6a, 6b geeignet, die an einer Flächenkonstruktion 1 gemäß Figur 3 vorgesehen sind.

Die Struktur der Figur 7 umfasst hier erhobene Punkte 12', welche geeignet sind, von Auflagern 6' des unteren Wandelementes 3a aufgenommen bzw. an diesem befestigt zu werden. Ferner weist die Struktur abgesenkte Punkte 12" auf, die von Auflagern 6" des oberen Wandelementes 3b aufnehmbar bzw. an diesen befestigbar sind.

Jeder Punkt 12'ₓ bzw. 12"ₓ ist in diesem Beispiel von 4 benachbarten Punkten 12" bzw. 12' umgeben. Jeder Punkt 12'ₓ bzw. 12"ₓ definiert dabei mit jeden der benachbarten Punkte 12" bzw. 12' jeweils einen Verbindungselementabschnitt 2aₓ, 2bₓ, 2cₓ und 2dₓ. Jeweils zwei der Verbindungselementabschnitte eines Punktes 12'ₓ bzw. 12"ₓ sind dabei einteilig ausgeführt. Bevorzugt berühren die zwei einteilig miteinander ausgeführten Verbindungselementabschnitte eines Punktes 12'ₓ bzw. 12"ₓ nicht die anderen beiden einteilig miteinander ausgeführten Verbindungselementabschnitte eines Punktes 12'ₓ bzw. 12"ₓ.

Die Vorteile der Flächenkonstruktion gemäß der vorliegenden Erfindung gegenüber konventionellen Isolationselementen bzw. VIP wird anhand nachfolgender Tabelle 1 deutlich. Hieraus wird insbesondere deutlich, dass die erfindungsgemäße Flächenkonstruktion, VIPAN, eine wesentlich geringere Wärmeleitung bei bedeutend niedrigerem Flächengewicht bereitstellt. Gleichzeitig kann somit auch bei gleichem Gewicht ein geringeres Bauvolumen bei gleichzeitig geringerer oder zumindest gleicher Wärmeleitung erreicht werden. Die Flächenkonstruktion gemäß der vorliegenden Erfindung ist somit deutlich vorteilhaft gegenüber den bekannten Isolationselementen. Der Dampfdiffusionswiderstand kennzeichnet hierbei die Fähigkeit der Paneele, das Durchlassen von Wasserdampf durch das Bauteil zu unterbinden. Unter einem Dampfdiffusionswiderstand gegen unendlich soll demnach verstanden werden, dass die erfindungsgemäße Flächenkonstruktion kein Wasserdampf durchlässt.

**Tabelle 1 zeigt Eigenschaften einer Produktvariante (zweilagig, d.h. bestehend aus zwei benachbart angeordneten überlappten Paneelen bzw. Flächenkonstruktionen 1) im Vergleich zu einer entsprechenden VIP konventionell.**

| | **VIPAN** | **VIP(konv.)** |
|---|---|---|
| • Paneeldicke | 2x18mm | 2x20mm |
| • Druck in Paneele | etwa 10⁻⁴ Bar | etwa 10⁻² Bar |
| • Anzahl Strahlungsschilder [n] | ca. 10 | 0 |
| • Wärmedämmwert [U] zweilagig | ca. 0,025 W/m²K | ca. 0,16 W/m²K |
| • Wärmeleitfähigkeit [λ] | ca. 0,001 W/m^{*}K | ca. 0.006 W/m^{*}K |
| • Flächengewicht | < 2 kg/m² | 7 kg/m² |
| • Dampfdiffosionswiderstandszahl [µ] | gegen unendlich | gegen unendlich |
| • Barriereschicht zum Vakuum | 0,12 mm Aluminium | Verbundfolie |

| | | |
|---|---|---|
| • Isolation entspricht einer ca. 2,5 m dicken Ziegelwand in moderner Bauweise | | |

**Tabelle 2 zeigt Eigenschaften einer einlagigen Produktvariante im Vergleich zu VIP konventionell (wie Tabelle 1, zweilagig überlappt, d.h. bestehend aus zwei benachbart angeordneten überlappten Paneelen).**

| | **VIPAN** | **VIP(konv.)** |
|---|---|---|
| • Paneeldicke | 18mm | 2x20mm |
| • Druck in Paneele | etwa 10-⁴ Bar | etwa 10⁻² Bar |
| • Anzahl Strahlungsschilder [n] | 10 | 0 |
| • Wärmedämmwert [U] | ca. 0,05 W/m²K | ca. 0,16 W/m²K |
| • Wärmeleitfähigkeit [λ] | ca. 0,001 W/m*K | ca. 0.006 W/m*K |
| • Flächengewicht | < 1 kg/m² | 7 kg/m² |
| • Dampfdiffusionswiderstandszahl [µ] | gegen unendlich | gegen unendlich |
| • Barriereschicht zum Vakuum | 0,12 mm Aluminium | Verbundfolie |

Die Vorliegende Erfindung, insbesondere bei Verwendung eines beschriebenen Randverbunds oder Rahmens, insbesondere mit VIP-Randelementen, erlaubt die einlagige Verwendung der Flächenkonstruktion.

Die Erfindung umfasst ebenfalls die genauen oder exakten Ausdrücke, Merkmale, numerischen Werte oder Bereiche usw., wenn vorstehend oder nachfolgend diese Ausdrücke, Merkmale, numerischen Werte oder Bereiche im Zusammenhang mit Ausdrücken wie z.B. "etwa, ca., um, im Wesentlichen, im Allgemeinen, zumindest, mindestens" usw. genannt wurden (also ,,etwa 3" soll ebenfalls ,,3" oder ,,im Wesentlichen radial" soll auch ,,radial" umfassen). Der Ausdruck ,,bzw."bedeutet überdies ,,und/oder".

## Patentansprüche

1. Flächenkonstruktion (1) zur Wärme- und/oder Schallisolation mittels Vakuum, die zwei zumindest teilweise gewölbte Wandelemente (3) und mindestens ein Verbindungselement (2) aufweist, wobei die Wandelemente (3) im Wesentlichen parallel zueinander angeordnet sind und wobei das Verbindungselement (2) mit den Wandelementen (3) verbunden ist und die Wandelemente (3) unter Aufnahme von Zugkräften gegeneinander abstützt, wobei mindestens ein Strahlungsschild (4) vorgesehen ist, dass sich zwischen den Wandelementen (3) erstreckt.

2. Flächenkonstruktion (1) nach Anspruch 1, wobei mindestens ein Verbindungselement (2) faden- oder schnurartig ausgebildet ist und vorzugsweise Fasern, Garn und/oder Drähte aufweist.

3. Flächenkonstruktion (1) nach einem der vorherigen Ansprüche, wobei das Strahlungsschild (4) von dem Verbindungselement (2) durchdrungen ist und/oder durch dieses gestützt ist.

4. Flächcnkonstruktion (1) nach einem der vorherigen Ansprüche, wobei das Strahlungsschild (4) an Stellen im Wesentlichen gleichen Temperaturniveaus des/der Verbindungselements(e) (2) mit diesem(n) in Kontakt steht.

5. Flächenkonstruktion (1) nach einem der vorherigen Ansprüche, wobei mindestens ein Strahlungsschild (4) zwischen den Wandelementen (3) zumindest abschnittweise entlang Bereichen annähernd gleichen Temperaturniveaus verläuft.

6. Flächenkonstruktion (1) nach einem der vorherigen Ansprüche, wobei das Strahlungsschild (4) folienartig und/oder als Fasermatrix ausgebildet ist.

7. Flächenkonstruktion (1) nach einem der vorherigen Ansprüche, wobei ein Strahlungsschild (4) ein Verbindungselement (2) vor und/oder bei der Montage zumindest teilweise fixiert.

8. Flächenkonstruktion (1) nach einem der vorherigen Ansprüche, wobei ein Verbindungselement (2) ein Strahlungsschild (4) im montierten und/oder vakuumierten Zustand zumindest teilweise fixiert.

9. Flächenkonstruktion (1) nach einem der vorherigen Ansprüche, wobei die Flächenkonstruktion (1) zumindest teilweise Materialien mit textilen Eigenschaften aufweist und/oder zur textilen Anwendung geeignet ist.

10. Flächenkonstruktion (1) nach einem der vorherigen Ansprüche, wobei mehrere Verbindungselemente (2) im Bereich einer Verbindungsstelle (6) mit einem Wandelement (3) verbunden sind, wobei die Verbindungselemente (2) vorzugsweise nicht miteinander in Kontakt stehen.

11. Flächenkonstruktion (1) nach einem der vorherigen Ansprüche, wobei mehrere mit einem Wandelement (3) verbundene Verbindungselemente (2), die insbesondere bevorzugt im Bereich einer Verbindungsstelle (6) eines Wandelementes (3) mit diesem verbunden sind, sich von der Verbindungsstelle (6) in unterschiedliche Richtungen erstrecken.

12. Flächenkonstruktion (1) nach einem der vorherigen Ansprüche, wobei die Flächenkonstruktion (1) im Randbereich einen Randverbund und/oder Rahmen aufweist, der zumindest teilweise in Verbindung mit einem Wandelement (3), einem Strahlungsschild (4) und/oder einem Verbindungselement (2) steht und vorzugsweise als Montagehilfe für mindestens ein Strahlungsschild (4) und/oder mindestens ein Verbindungselement (2) dient.

13. Flächenkonstruktion (1) nach einem der vorherigen Ansprüche, wobei die Wölbungen eine konkave und eine konvexe Seite aufweisen und die konkaven Seiten und die konvexen Seiten der Wölbungen jeweils auf einer Seite der Wandelemente (3) ausgebildet sind.

14. Flächenkonstruktion (1) nach einem der vorherigen Anspruche, wobei die Wandelemente (3) ineinandergreifend angeordnet sind.

15. Verfahren zur Herstellung einer Flächenkonstruktion (1), nach einem der vorherigen Ansprüche, mit den folgenden Schritten:
Bereitstellen von Wandelementen (3);
Bereitstellen von mindestens einem Strahlungsschild (4) sowie von mindestens einem Verbindungselement (2); und
Anordnen von mindestens einem Strahlungsschild (4) sowie von mindestens einem Verbindungselement (2) zwischen den Wandelementen (3).
